# EUROPÄISCHE PATENTANMELDUNG

(11) **EP 1 741 963 A2**
(43) Veröffentlichungstag der Anmeldung: **10.01.2007**
(21) Anmeldenummer: 06013077.0
(22) Anmeldetag: 24.06.2006
(51) Int. Cl.: F16H 61/32, F16H 63/30, F16H 57/02

(54) **Getriebevorrichtung für Kraftfahrzeuge, Getriebeaktor, Axial-/Radiallagereinheit sowie Verfahren zur Herstellung einer Kraftfahrzeug-Getriebevorrichtung**

(30) Priorität: 08.07.2005 DE 102005032006
(71) Anmelder: LuK Lamellen und Kupplungsbau Beteiligungs KG, 77815 Bühl (DE)
(72) Erfinder: Ehrlich, Matthias, 77815 Bühl (DE); Esly, Norbert, 77815 Bühl (DE)

(57) **Zusammenfassung**

Die Erfindung betrifft eine Getriebevorrichtung für Kraftfahrzeuge, wobei die Getriebevorrichtung mehrere Radsätze für die Bildung von Gängen aufweist, und wobei die Getriebevorrichtung für das Einlegen und Auslegen von Gängen eine innere Getriebeschaltung sowie einen Getriebeaktor zum Betätigen der inneren Getriebeschaltung aufweist, und wobei die Getriebevorrichtung ein Getriebegehäuse aufweist, in welchem die für die Bildung von Gängen vorgesehenen Radsätze aufgenommen werden, wobei der Getriebeaktor zwei separate Funktionsmodule aufweist, von denen ein erstes ein Antriebsmodul ist und von denen ein zweites ein Betätigungsmodul ist, wobei das Antriebsmodul zumindest eine, insbesondere elektronisch steuerbare, Antriebseinrichtung, wie Elektromotor, aufweist und wobei das Betätigungsmodul beim Ein- und Auslegen von Gängen im Kraftfluss zwischen dem Antriebsmodul und der inneren Getriebeschaltung ist, und wobei das Betätigungsmodul und das Antriebsmodul separat an dem Getriebegehäuse gelagert sind.

## Beschreibung

Die Erfindung betrifft eine Getriebevorrichtung, insbesondere eine 3-Wellen-Getriebevorrichtung, für Kraftfahrzeuge, einen Getriebeaktor, eine Axial-/Radiallagereinheit sowie ein Verfahren zur Herstellung einer Kraftfahrzeug-Getriebevorrichtung.

Kraftfahrzeug-Getriebeeinrichtungen sind in diversen Ausgestaltungen bekannt. Ausgehend von konventionellen Handschaltgetrieben wurden beispielsweise Automatisierte Schaltgetriebe (ASG) geschaffen, bei denen Schaltvorgänge elektronisch gesteuert bzw. ausgelöst werden. Ferner sind Getriebe bekannt geworden, die parallel geschaltete Antriebsstrangzweige aufweisen, wie beispielsweise Doppelkupplungsgetriebe (DKG) bzw. Parallelschaltgetriebe (PSG). Modernere Kraftfahrzeug-Getriebeeinrichtungen der letztgenannten Art werden meist ebenfalls elektronisch gesteuert.

Bekannt geworden sind ferner diverse Betätigungseinrichtungen für Getriebe. Eine beispielhafte, bekannte Betätigungseinrichtung ist in der DE 103 16 434 A1 erläutert. Die dort erläuterte Betätigungseinrichtung ist elektromechanisch ausgebildet und weist einen Schaltmotor für die Erzeugung von Schaltbewegungen und einen Wählmotor für die Erzeugung von Wählbewegungen auf.

Bei Kraftfahrzeug-Getriebeeinrichtungen unterscheidet man häufig zwischen dem inneren Getriebe mit seiner inneren Getriebeschaltung und einer äußeren Getriebeschaltung, die - insbesondere bei fremdkraftunterstützten Gestaltungen bzw. bei Gestaltungen mit Elektromotor - auch als Aktor bezeichnet wird.

Das innere Getriebe mit seiner inneren Getriebeschaltung weist dabei i.d.R. die die unterschiedlichen Übersetzungen bildenden Bauteile, wie Zahnräder, sowie mit diesen Zahnräder gekoppelte bzw. koppelbare Bauteile, wie Wellen, auf. Dabei sind i.d.R. Gangkupplungen oder funktionsgleiche oder funktionsähnliche Einrichtungen vorgesehen, mittels welchen Kopplungen zum Einlegen von Gängen erzeugt und zum Auslegen von Gängen gelöst werden können. Dies kann beispielsweise so sein, dass mittels einer solchen Gangkupplung eine drehfeste Verbindung zwischen einem Zahnrad eines einen Gang bildenden Zahnradsatzes und einer dieses Zahnrad tragenden Welle erzeugt bzw. gelöst werden kann. Von diesen Gangkupplungen erstreckt sich bis zur Schnittstelle zur äußeren Getriebeschaltung die innere Getriebeschaltung. Diese weist meist mehrere Mechanismen auf, die sich jeweils von einer Gangkupplung in Richtung der äußeren Getriebeschaltung erstrecken. Es sind diverse Gestaltungen bekannt, bei denen zur Kraftübertragung von der äußeren Getriebeschaltung auf die innere Getriebeschaltung diese angesprochenen Mechanismen jeweils ein Schaltmaul oder dergleichen aufweisen, das beispielsweise in einer Schaltschiene oder Schaltgabel oder dergleichen eingebracht sind. Die äußere Getriebeschaltung weist dabei häufig ein oder mehrere Teile, wie Schaltfinger, auf die in diese Schaltmäuler betätigend eingreifen können. Dies ist häufig so realisiert, dass ein solcher Schaltfinger oder dergleichen zum Wählen in eine Position bewegt werden kann, aus der er dann in einer weiteren Bewegung, die hinsichtlich ihrer Richtung i.d.R. von der Wählbewegungsrichtung abweicht, zum Schalten bewegt werden kann.

Ferner ist bekannt, dass bei Gangwechselvorgängen in klassisch gestalteten gestuften Kraftfahrzeug-Getriebeeinrichtungen - ausgehend von dem alten Gang - die folgenden drei Schritte in zeitlicher Abfolge ablaufen: "Auslegen des alten Ganges" - "Wählen" - "Einlegen des Zielganges". Darüber hinaus sind Kraftfahrzeuggetriebegestaltungen bekannt geworden, bei denen das Wählen bzw. Wählbewegungen vor dem Auslegen des alten Ganges stattfinden kann. Bei solchen Gestaltungen ist beispielsweise vorgesehen, das ein Hauptbetätigungselement bzw. Schaltfinger im Wesentlichen nur für das Einlegen von Gängen zuständig ist und zusätzliche Geometrien die Funktion des Auslegens von Gängen übernehmen. Dabei werden insbesondere so genannte Nebenbetätigungselemente für die Auslegefunktion verwendet. Bekannt ist weiter, dass sich die zusätzlichen Geometrien einerseits beispielsweise an einer zentralen Schaltwelle befinden und andererseits an Schaltmäulern, die an den genannten Mechanismen bzw. Endausgangsmechanismen bzw. Schaltgabeln oder Schaltschienen oder dergleichen vorgesehen sind.

Die Auslegegeometrien wirken in aller Regel in Gassen, in denen der Schaltfinger nicht aktiv ist. Dabei kann vorgesehen sein, dass eine feste Zuordnung zwischen Schaltfinger und Auslegegeometrie dabei gleichzeitig eine aktive Gangsperre darstellt. Konstruktive Umsetzungen dieses Ansatzes werden daher auch als "Active Interlock" bezeichnet.

Bei einem solchen "Active Interlock" ist in aller Regel vorgesehen, dass das Hauptbetätigungselement bzw. der Schaltfinger auch bei eingelegtem Gang in eine Mittel- bzw. Neutralposition zurück bewegt werden kann, ohne den Gang auszulegen. Die Wählbewegung wird dabei möglich, bevor der Gang ausgelegt ist.

Beispiele für derartige Gestaltungen sind beispielsweise in der DE 102 06 561 A1 der Anmelderin erläutert.

Bekannt sind ferner sog. 3-Wellen-Getriebe bzw. 3-Wellen-Getriebevorrichtung, so wie der Einsatz derartiger Getriebe(vorrichtungen) in Kraftfahrzeugen. Bei diesen ist eine der Brennkraftmaschine zugewandte Getriebeeingangswelle bzw. Antriebswelle vorgesehen, sowie zwei parallel geschaltete Hauptwellen, die - aus Sicht der Brennkraftmaschine - jeweils abtriebsseitig der Antriebswelle angeordnet sind. Diese Hauptwelle werden im Stand der Technik teilweise auch als Abtriebswelle oder Ausgangswellen bezeichnet. Dabei kann ferner eine Getriebeausgangswelle bzw. Abtriebswelle gegeben sein, die von den beiden genannten Hauptwelle verschieden ist und die - aus Sicht der Brennkraftmaschine - abtriebsseitig der beiden Hauptwellen angeordnet ist. Diese Getriebeausgangswelle bzw. Abtriebswelle ist häufig ein Differential bzw. weist ein Differential auf. Zwischen dieser Getriebeausgangswelle bzw. Antriebswelle und jeder der Hauptwellen sind dabei Radsätze zur Bildung von Gängen vorgesehen. Von diesen Hauptwellen bzw. der jeweiligen, bzgl. welcher ein Gang eingelegt ist, wird das Drehmoment in Richtung des Differentials übertragen. Weiter ist bekannt, dass solche 3-Wellen-Getriebe Bestandteil von Doppelkupplungsgetrieben (DKG) bzw. Parallelschaltgetrieben (PSG) sein können. Dabei ist vorgesehen, dass jedes der beiden parallelgeschalteten Teilgetriebe nach Art eines 3-Wellen-Getriebes ausgebildet ist. Diese kann beispielsweise so sein, dass diesen beiden Teilgetrieben separate Antriebswellen bzw. Getriebeeingangswellen zugeordnet sind, und sich die beiden Teilgetriebe die beiden Hauptwellen und somit auch die gegebenenfalls vorhandene Abtriebswelle teilen.

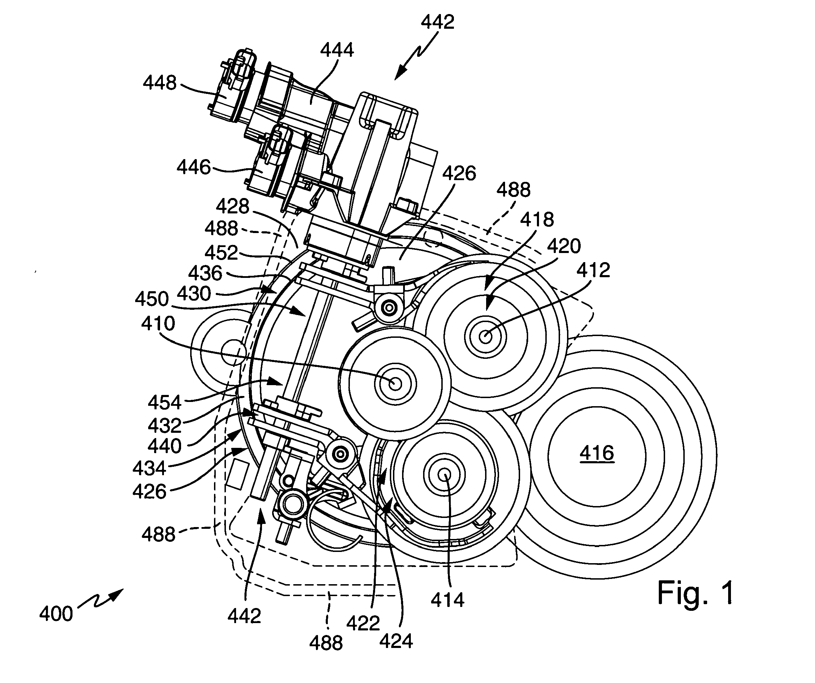

Fig. 1 zeigt ein beispielhaftes, der Anmelderin - gegebenenfalls allerdings nur intern - bekanntes 3-Wellen-Getriebe in schematischer Ansicht. Das 3-Wellen-Getriebe 400 weist eine Antriebswelle 410, zwei Hauptwellen, nämlich eine erste Hauptwelle 412 sowie eine zweite Hauptwelle 414, und eine Abtriebswelle 416 auf.

Die erste Hauptwelle 412 und die zweite Hauptwelle 414 sind jeweils ― sofern der Drehmomentfluss über die entsprechende Welle übertragen wird - im Drehmomentfluss zwischen der Antriebswelle 410 und der Abtriebswelle 416 angeordnet. Die Abtriebswelle 416 ist ein Differential bzw. weist ein Differential auf.

Es sind mehrere Radsätze 418, 420, 422, 424 zur Bildung von Wellen vorgesehen. Mittels dieser Radsätze 418, 420, 422, 424 lässt sich jeweils - sofern ein entsprechender Gang eingelegt ist - ein Drehmoment von der Antriebswelle 410 auf die Abtriebswelle 416 übertragen.

Ein Teil 418, 420 dieser Radsätze 418, 420, 422, 424 ist zwischen der Antriebswelle 410 und der ersten Hauptwelle 412 angeordnet, so dass sich - sofern ein entsprechender Gang eingelegt ist - über diesen jeweiligen Radsatz 418 bzw. 420 zwischen der Antriebswelle 410 und der Abtriebswelle 416 ein Drehmoment über die erste Hauptwelle 412 übertragen lässt.

Ein anderer Teil 422, 424 dieser Radsätze 418, 420, 422, 424 ist zwischen der Antriebswelle 410 und der zweiten Hauptwelle 414 angeordnet, so dass sich - sofern ein entsprechender Gang eingelegt ist - über den jeweiligen Radsatz 422 bzw. 424 ein Drehmoment von der Antriebswelle 410 auf die Abtriebswelle 416 über die zweite Hauptwelle 414 übertragen lässt.

Für das Ein- und Auslegen von Gängen sind nicht näher dargestellte Gangkupplungen bzw. Schiebehülsen vorgesehen, mittels welchen die Räder bzw. Zahnräder, die den Radsätzen 418, 420 zugeordnet sind und von der ersten Hauptwelle 412 getragen werden, mit dieser ersten Hauptwelle 412 zum Einlegen von jeweiligen Gängen drehfest gekoppelt werden können und zum Auslegen der entsprechenden Gänge entkoppelt werden können, so dass die entsprechenden Räder drehbeweglich gegenüber der ersten Hauptwelle 412 angeordnet sind.

In entsprechender Weise sind für das Ein- und Auslegen von Gängen (nicht näher gezeigte) Gangkupplungen bzw. Schiebehülsen vorgesehen, die von den vorgenannten verschieden sind und mittels welchen die Räder bzw. Zahnräder, die den Radsätzen 422, 424 zugeordnet sind und von der zweiten Hauptwelle 414 getragen werden mit dieser zweiten Hauptwelle 414 zum Einlegen von jeweiligen Gängen drehfest gekoppelt werden können bzw. zum Auslegen der entsprechenden Gänge von der zweiten Hauptwelle 414 so entkoppelt werden können, dass das entsprechende Zahnrad drehbeweglich gegenüber dieser zweiten Hauptwelle 414 angeordnet ist.

Ferner ist eine innere Getriebeschaltung 426 vorgesehen, mittels welcher die Gänge ein- bzw. ausgelegt werden können. Die zuvor angesprochenen Gangkupplungen sind zumindest teilweise Bestandteile dieser inneren Getriebeschaltung 426. Insbesondere können Schiebehülsen, die Bestandteil der Gangkupplungen sind, Bestandteil der inneren Getriebeschaltung 426 sein.

Die innere Getriebeschaltung 426 weist ferner eine Mehrzahl von Schaltschienen 428, 430, 432, 434 auf, die insbesondere Bestandteil von den Endausgangsmechanismen sind, welche die innere Getriebeschaltung 426 bilden.

In der Gestaltung gemäß Fig. 1 ist dies so, dass zwei Schaltschienen 428, 430 bzw. ein Schaltschienenpaar 436 zum Ein- und Auslegen von Gängen vorgesehen sind, die der ersten Hauptwelle 412 zugeordnet sind und zwei Schaltschienen 432, 434 bzw. ein Schaltschienenpaar 440 zum Ein- und Auslegen von Gängen vorgesehen ist, welche der zweiten Hauptwelle 414 zugeordnet sind.

Dabei ist insbesondere vorgesehen, dass die Schaltschiene 428 Bestandteil eines Endausgangsmechanismus ist und die Schaltschiene 430 Bestandteil eines davon verschiedenen Endausgangsmechanismus ist, wobei diese Endausgangsmechanismen wiederum jeweils Bestandteil der inneren Getriebeschaltung 426 sind. Ferner ist dabei ist insbesondere vorgesehen, dass die Schaltschiene 432 Bestandteil eines Endausgangsmechanismus ist und die Schaltschiene 434 Bestandteil eines davon verschiedenen Endausgangsmechanismus ist, wobei diese Endausgangsmechanismen wiederum jeweils Bestandteil der inneren Getriebeschaltung 426 sind, und wobei diese beiden Endausgangsmechanismen von den beiden zuvor angesprochen verschieden sind.

Ferner ist ein Getriebeaktor bzw. eine Getriebeaktorik 442 vorgesehen, mittels welchem bzw. mittels welcher die innere Getriebeschaltung 426 bzw. deren Schaltschienen 428, 430, 432, 434 zum Ein- und Auslegen von Gängen betätigt werden kann.

Bei der Getriebebauart gemäß Fig. 1 ist es zweckmäßig bzw. erforderlich, dass jeweils ein Schaltschienenpaar 436 der ersten Hauptwelle 412 zugeordnet ist und ein Schaltschienenpaar 440 der zweiten Hauptwelle 414 zugeordnet ist. Aufgrund der Lage der Antriebswelle 410 zwischen den beiden Hauptwellen 412, 414 sind die Positionen der Schaltschienenpaare 436, 440 mit einem Mindestabstand zueinander behaftet.

Wie bereits angesprochen, zeigt Fig. 1 eine mögliche Ausführung einer - zumindest der Anmelderin vorbekannten - Getriebeaktorik 442, welche für diese Bauart verwendet werden kann.

Die Getriebeaktorik 442 besteht im wesentlichen aus dem Aktorgehäuse 444 inklusive der beiden Motoren 446, 448, von denen einer ein Wählmotor und einer ein Schaltmotor ist, mit Schalt- und Wählkinematik. Ferner ist eine Schaltwelle 450 Bestandteil der Getriebeaktorik 442. Die Schaltwelle 450 weist Betätigungselemente 452, 454 entsprechend dem bekannten Stand der Technik für ein "Active Interlock" auf.

Fig. 1 kann entnommen werden, ist bei der dort gezeigten Gestaltung des Getriebeaktors 442 ein Aktorgehäuse 444 vorgesehen. Ferner weist das 3-Wellengetriebe 400 gemäß Fig. 1 eine - dort teilweise dargestelltes - Getriebegehäuse 488 auf. Dieses Aktorgehäuse 444 ist außerhalb des Getriebegehäuses 488 und in Verlängerung der Schaltwelle 450 angeordnet.

Der Anmelderin ist weiter - gegebenenfalls allerdings nur intern - eine Axial-/Radiallagereinheit für die Lagerung eines drehbeweglichen Teils bekannt, die beispielsweise bei der anhand der Fig. 1 erläuterten Gestaltung zur Lagerung der Spindel verwendet werden kann. Diese Axial-/Radiallagereinheit weist drei Anlaufscheiben auf, sowie zwei Axialnadellager. Die drei Anlaufscheiben sind axial nebeneinander angeordnet, wobei axial zwischen jeweils zwei axial benachbarten Anlaufscheiben jeweils eines der beiden Axialnadellager positioniert ist. Die axial mittlere Anlaufscheibe ist mit dem drehbeweglichen Teil fest gekoppelt und die beiden axial außen angeordneten Anlaufscheiben sind jeweils mit einer festen Umgebung, gegenüber der das drehbeweglichen Teil drehbar angeordnet sein soll, fest gekoppelt, oder umgekehrt. In der einen Orientierung der Axialrichtung erfolgt die axiale Abstützung über die mittlere sowie eine der beiden axial äußeren Anlaufscheiben, sowie das zwischen diesen beiden Anlaufscheiben angeordnete, eine Axiallager; in der anderen, entgegen gesetzten Orientierung der Axialrichtung erfolgt die axiale Abstützung über die mittlere sowie andere der beiden axial äußeren Anlaufscheiben, sowie das zwischen diesen beiden Anlaufscheiben angeordnete, andere Axiallager.

Der Erfindung liegt die Aufgabe zugrunde einen Getriebeaktor bzw. eine Getriebevorrichtung mit Getriebeaktor zu schaffen, der bzw. die betriebssicher ist und sich gut an Bauraumverhältnisse anpassen lässt. Wünschenswert wäre ferner eine Möglichkeit aufzufinden, mittels welcher ein drehbewegtes Teil eines Getriebeaktors, wie beispielsweise Schaltwelle, betriebssicher und kostengünstig bzw. bauraumangepasst gelagert werden kann.

Erfindungsgemäß wird insbesondere eine Getriebevorrichtung gemäß Anspruch 1 oder gemäß Anspruch 13 oder gemäß Anspruch 14 oder gemäß Anspruch 16 oder gemäß Anspruch 17 vorgeschlagen. Ein erfindungsgemäßer Getriebeaktor ist Gegenstand des Anspruchs 19. Eine erfindungsgemäße Axial-/Radiallagereinheit ist Gegenstand des Anspruchs 20. Ein erfindungsgemäßes Verfahren ist Gegenstand des Anspruchs 22. Bevorzugte Gestaltungen sind Gegenstand der Unteransprüche.

Erfindungsgemäß wird insbesondere eine Getriebevorrichtung für Kraftfahrzeuge vorgeschlagen. Diese Getriebevorrichtung weist mehrere Radsätze zur Bildung von Übersetzungsstufen bzw. Gängen auf. Ferner weist die Getriebevorrichtung für das Einlegen und das Auslegen von Gängen eine innere Getriebeschaltung auf, sowie einen Getriebeaktor zum Betätigen dieser inneren Getriebeschaltung. Überdies weist die Getriebevorrichtung ein Getriebegehäuse auf, in welchem die für die Bildung von Gängen vorgesehenen Radsätze aufgenommen werden.

In einer besonders zu bevorzugenden Weiterbildung ist die Getriebevorrichtung als 3-Wellen-Getriebevorrichtung ausgebildet. Dabei kann beispielsweise vorgesehen sein, dass eine Eingangs- bzw. Antriebswelle vorgesehen ist, die - sofern das Getriebe im Kraftfahrzeug montiert ist - brennkraftmaschinenseitig angeordnet ist und aus dem Getriebegehäuse herausragt. Weiter kann bei einer solchen 3-Wellen-Getriebevorrichtung vorgesehen sein, dass die beiden Hauptwellen der Getriebevorrichtung, die im Stand der Technik häufig auch als Abtriebs- oder Ausgangswellen bezeichnet werden, aus dem Getriebegehäuse herausragen.

Weiter ist vorgesehen, dass der Getriebeaktor zwei separate Funktionsmodule aufweist. Ein erstes dieser beiden Funktionsmodule ist ein Antriebsmodul, und das zweite dieser beiden Funktionsmodule ist ein Betätigungsmodul. Das Antriebsmodul weist zumindest eine elektronisch steuerbare Antriebseinrichtung auf. Eine solche elektronisch steuerbare Antriebseinrichtung kann beispielsweise ein Elektromotor sein. Beispielsweise kann dann vorgesehen sein, dass ein solcher Elektromotor in Signalverbindung mit einem elektronischen Steuergerät steht, welches die Betätigung des Elektromotors steuert. In vorteilhafter Ausgestaltung sind zwei elektronisch steuerbare Antriebseinrichtungen vorgesehen, von denen die eine für das Schalten vorgesehen ist, und daher auch als Schaltmotor bezeichnet wird, und von dem die andere für das Wählen vorgesehen ist, und daher auch als Wählmotor bezeichnet wird. Der Wählmotor sowie der Schaltmotor können jeweils Elektromotoren sein. Es ist aber auch möglich, dass genau eine Antriebseinrichtung, wie genau ein Elektromotor, vorgesehen ist, welcher sowohl Antriebsbewegungen für das Schalten, als auch Antriebsbewegungen für das Wählen erzeugt. Das Betätigungsmodul und das Antriebsmodul sind so angeordnet bzw. wirken so zusammen, dass das Betätigungsmodul zum Ein- bzw. Auslegen von Gängen im Kraftfluss zwischen dem Antriebsmodul und der inneren Getriebeschaltung ist.

Dabei ist insbesondere vorgesehen, dass das Betätigungsmodul und das Antriebsmodul eine kinematische Schnittstelle für das Schalten ausbilden, bzw. eine derartige Schnittstelle zwischen dem Betätigungsmodul und dem Antriebsmodul gegeben ist. Zusätzlich ist insbesondere vorgesehen, dass das Betätigungsmodul und das Antriebsmodul eine kinematische Schnittstelle für das Wählen ausbilden bzw. eine solche zwischen dem Betätigungsmodul und dem Antriebsmodul gegeben ist.

Erfindungsgemäß ist insbesondere vorgesehen, dass das Betätigungsmodul und das Antriebsmodul separat an dem Getriebegehäuse gelagert sind.

In vorteilhafter Weiterbildung weist das Betätigungsmodul ein Zahnradsegment, eine (erste) Zahnstange sowie mehrere Betätigungselemente bzw. Betätigungselementeinrichtungen auf. Vorteilhaft ist auch, dass das Betätigungsmodul ferner eine Schaltwelle aufweist. Besonders bevorzugt ist dabei, dass das Betätigungsmodul eine Schaltwelle aufweist, auf bzw. an der ein Zahnradsegment, eine erste Zahnstange sowie mehrere Betätigungselemente bzw. Betätigungselementeinrichtungen angeordnet sind.

Das angesprochene Zahnradsegment dient dabei insbesondere dazu, dass über dieses Kräfte für das Schalten vom Antriebsmodul auf das Betätigungsmodul übertragbar sind. Dies kann beispielsweise so sein, dass das Antriebsmodul eine zweite Zahnstange aufweist, die in das angesprochene Zahnradsegment eingreift. Es kann vorgesehen sein, dass das Zahnradsegment mit einem Ansatz zur Referenzierung des Schaltschemas und / oder für die Bildung eines Schaltschemas versehen ist.

Der Eingriff sowie die Anordnung der zweiten Zahnstange sowie des Zahnradsegments ist dabei vorteilhafter Weise so, dass eine Axialbewegung der zweiten Zahnstange eine Drehbewegung des angesprochenen Zahnradsegment bzw. der Schaltwelle, auf dem dieses angeordnet ist, bewirkt.

Die erste Zahnstange dient insbesondere dazu, dass über diese Kräfte für das Wählen von dem Antriebsmodul auf das Betätigungsmodul übertragbar sind bzw. übertragen werden. Zu diesem Zweck kann beispielsweise das Antriebsmodul ein Zahnrad oder einen (ersten) Stirnradfortsatz eines ersten Hohlrades aufweisen, der in diese erste Zahnstange des Betätigungsmoduls eingreift. Ein Verdrehen des angesprochenen Zahnrades bzw. des ersten Stirnradfortsatzes bewirkt dann, dass die erste Zahnstange des Betätigungsmoduls axial bewegt wird und somit die Schaltwelle zum Wählen axial bewegt wird.

Die zuvor angesprochenen Betätigungselemente des Betätigungsmoduls sind so angeordnet, dass sie bei einem Verschwenken des Zahnradsegments bzw. der Schaltwelle ebenfalls verschwenkt werden. Von diesen Betätigungselementen ist zumindest eines - dies können aber beispielsweise auch zwei oder drei oder mehr sein - ein Hauptbetätigungselement und eines oder mehrere ein Nebenbetätigungselement.

Über die Betätigungselemente können Kräfte für das Ein- und Auslegen von Gängen vom Betätigungsmodul auf die innere bzw. an die innere Getriebeschaltung übertragen werden. Dies kann insbesondere so sein, dass die Betätigungselemente zum Ein- und Auslegen von Gängen in Schaltmäuler eingreifen, die in Schaltschienen vorgesehen sind, um diese Schaltschienen entsprechend zum Ein- bzw. Auslegen von Gängen zu verschieben. Prinzipiell ist es aber auch möglich, dass anstelle von Schaltschienen Schaltgabeln oder entsprechende Elemente vorgesehen sind. Derartige Schaltschienen, Schaltgabeln oder dergleichen sind dabei Bestandteil der inneren Getriebeschaltung.

Das bzw. die zuvor angesprochenen Hauptbetätigungselemente dienen insbesondere für das Einlegen von Gängen, und das bzw. die angesprochenen Nebenbetätigungselemente dienen ausschließlich zum Auslegen von Gängen.

Insbesondere wirken die Haupt- und Nebenbetätigungselemente derart zusammen, dass stets sichergestellt ist, dass in dem gleichen Getriebe bzw. Teilgetriebe nur ein Gang gleichzeitig eingelegt sein kann. Dies ist insbesondere so, dass dann, wenn mittels eines Hauptbetätigungselements auf eine Schaltschiene bzw. einen Endausgangsmechanismus zum Einlegen eines Ganges eingewirkt wird, mittels der Nebenbetätigungselemente sichergestellt wird, dass alle anderen Gängen des gleichen Getriebes bzw. Teilgetriebes ausgelegt sind, bevor der angestrebte Zielgang mittels dieses Hauptbetätigungselements eingelegt ist.

Die Haupt- und Nebenbetätigungselemente sind insbesondere Bestandteil eines "Active Interlock"-Mechanismus. Zur beispielhaften Gestaltung eines "Active Interlock"-Mechanismus wird auf die diesbezüglichen, eingangs genannten Ausführungen und die dortigen Verweise ausdrücklich Bezug genommen. Diese in Bezug genommen Gestaltungen bzw. deren Merkmale können bevorzugte Weiterbildungen der Erfindung sein.

In vorteilhafter Weiterbildung weist das Antriebsmodul ― und insbesondere eine Wählmechanik des Antriebsmoduls - für das Bereitstellen von auf das Betätigungsmodul einwirkenden Betätigungskräften zum Schalten einen Schaltmotor auf, dessen Motorausgangswelle mit einer (zweiten) Antriebsverzahnung versehen ist, sowie ein zweites Hohlrad, das mit einem zweiten Stirnradfortsatz versehen ist, sowie ein Stirnrad, eine Spindel, eine zweite Zahnstange bzw. eine mit einer zweiten Zahnstange versehenen Spindelmutter, ein Lagerbauteil für die Lagerung der Spindel sowie eine Axial-/Radiallagereinheit für die Lagerung der Spindel.

Dabei werden die vom Antriebsmodul auf das Betätigungsmodul einwirkenden Kräfte zum Schalten insbesondere an der kinematischen Schnittstelle für das Schalten bereitgestellt. In vorteilhafter Weiterbildung ist vorgesehen, dass der zweite Stirnradfortsatz des zweiten Hohlrades axial versetzt zu dem (zweiten) Hohlrad bzw. dem eigentlichen Hohlrad bzw. dessen Innenverzahnung angeordnet ist.

In besonders vorteilhafter Weiterbildung ist vorgesehen, dass eine an einer Motorausgangswelle des Schaltmotors vorgesehene zweite Antriebsverzahnung des Antriebsmoduls in das zweite Hohlrad des Antriebsmoduls eingreift, wobei der an diesem zweiten Hohlrad vorgesehene zweite Stirnradfortsatz in das Stirnrad des Antriebsmoduls eingreift, und wobei dieses Stirnrad drehfest auf der Spindel angeordnet ist. Bei dieser bevorzugten Weiterbildung ist ferner vorgesehen, dass diese Spindel drehbeweglich und axial fest gelagert ist, und dass eine zweite Zahnstange bzw. eine mit einer zweiten Zahnstange versehene Spindelmutter auf der Spindel angeordnet ist, wobei zur Lagerung der Spindel einerseits das angesprochene Lagerbauteil, und andererseits die angesprochene Axial-/Radiallagereinheit vorgesehen ist. Dabei ist insbesondere vorgesehen, dass die genannte Spindelmutter bzw. die genannte zweite Zahnstange durch Verdrehen der Spindel axial bewegt werden kann. Dabei ist insbesondere vorgesehen, dass diese zweite Zahnstange des Antriebsmoduls - wie bereits oben angesprochen - in das Zahnradsegment des Betätigungsmoduls bzw. der Schaltwelle eingreift, so dass eine Axialverlagerung der angesprochenen zweiten Zahnstange ein Verschwenken des Zahnradsegments bzw. des Betätigungsmoduls bzw. der Schaltwelle bewirkt. Wie angesprochen, sind die Betätigungselemente vorteilhafterweise drehfest mit der Schaltwelle verbunden, so dass mittels dieses, mittels der zweiten Zahnstange bewirkten Verschwenken des Zahnradsegments das Schalten bewirkt werden kann.

Gemäß einer vorteilhaften Weiterbildung weist die Getriebevorrichtung das bereits angesprochene Getriebegehäuse und / oder ein Aktorgehäuse auf, welches zumindest einen Teil der Bauteile des Aktors aufnimmt, wobei das Lagerbauteil, mittels welchem die angesprochene Spindel gelagert ist, an diesem Getriebegehäuse und / oder an diesem Aktorgehäuse befestigt ist. Dabei ist insbesondere vorgesehen, dass das Lagerbauteil so gestaltet und so befestigt ist, das es eine von Begrenzungswänden des Aktorgehäuses und / oder von den Begrenzungswänden des Getriebegehäuses beabstandete Lagerstelle für die Spindel schafft bzw. bereitstellt, von welcher die Spindel aufgenommen wird. In besonders zu bevorzugender Ausgestaltung ist ferner ein Adapterbauteil vorgesehen, wobei die genaue Position der Spindel zum Getriebe- bzw. Aktorgehäuse durch die Fixierung des Lagerbauteils mit dem Adapterbauteil eingestellt wird bzw. eingestellt ist. Insbesondere dabei ist vorteilhafterweise vorgesehen, das mittels des Adapterbauteils das Lagerbauteil gegen Verdrehung gesichert wird.

Beispielsweise kann vorgesehen sein, dass das Lagerbauteil in das Aktorgehäuse eingesteckt und mittels des Adapters gesichert ist.

In bevorzugender Ausgestaltung hat das Lagerbauteil die Funktion, eine innen, freiliegende und genaue Lagerstelle zu ermöglichen, und zwar insbesondere für die angesprochene Spindel. Dabei kann vorgesehen sein, das diese Gestaltung gleichzeitig die Montage sicherstellt bzw. vollständig sicherstellt. In einer besonders zu bevorzugenden Ausgestaltung ist vorgesehen, dass die Spindel mittels des Lagerbauteils an ihrem einen Ende gelagert ist, und mittels der Axial-/Radiallagereinheit an dem anderen, entgegen gesetzten Ende gelagert ist.

Die angesprochene Axial-/Radiallagereinheit, mittels welcher die Spindel in bevorzugter Ausgestaltung gelagert ist, weist besonderes bevorzugt einen einseitig offenen Träger auf, so wie genau ein Axialnadellager und genau zwei Anlaufscheiben. Der Träger ist dabei in vorteilhafter Ausgestaltung ein Kunststoffträger.

In besonders zu bevorzugender Ausgestaltung der Axial-/Radiallagereinheit ist das Axialnadellager axial zwischen den beiden Anlaufscheiben - insbesondere mit Kontakt zu diesen - positioniert. Dabei kann vorgesehen sein, dass das Paket aus diesen beiden Anlaufscheiben mit dem dazwischen angeordneten Axialnadellager - vorzugsweise mit einem gewissen Spiel - einerseits in einer Vertiefung, wie Nut, aufgenommen, die im (Kunststoff)Träger vorgesehen ist, und andererseits in einer Vertiefung, die auf der Spindel umfangsmäßig gebildet wird. Dabei ist insbesondere vorgesehen, das sich das Axialnadellager um die Spindel herum erstreckt.

Das Betätigungsmodul - und insbesondere eine Wählkinematik des Betätigungsmoduls - weist in vorteilhafter Ausgestaltung - insbesondere für das Bereitstellen von auf das Betätigungsmodul einwirkenden Betätigungskräften zum Wählen - einen Wählmotor auf, sowie ein erstes Hohlrad, einen Stift bzw. eine Achse und ein (erstes) Blech. Der Wählmotor weist dabei eine Motorausgangswelle auf, die mit einer ersten Antriebsverzahnung versehen ist. Diese Antriebsverzahnung kann direkt in die Motorausgangswelle eingebracht sein oder an einem separaten Teil, wie beispielsweise separaten Hülse, vorgesehen sein, das bzw. die drehfest mit der Motorausgangswelle verbunden ist. Das erste Hohlrad weist einen ersten Stirnsatzradsatz auf. Dieser erste Stirnsatzradsatz ist vorteilhafterweise axial versetzt zum ersten Hohlrad bzw. zu dessen Innenverzahnung angeordnet. Dabei ist insbesondere vorgesehen, dass der Stift bzw. die Achse das erste Hohlrad trägt. Das angesprochene (erste) Blech dient insbesondere der Bildung einer Lagerstelle für den Stift bzw. die angesprochene Achse. Dabei kann vorgesehen sein, dass die Achse bzw. der Stift auf einer Seite fest im Gehäuse bzw. im Aktorgehäuse angeordnet, insbesondere eingepresst, ist, wobei auf der anderen Seite das (erste) Blech die Lagerstelle für den Stift bzw. die Achse bildet. Das (erste) Blech kann beispielsweise durch seine Form radial und axial am Gehäuse fixiert sein.

In vorteilhafter Weiterbildung kann vorgesehen sein, dass die an der Motorausgangswelle des Wählmotors vorgesehene erste Antriebsverzahnung in das erste Hohlrad eingreift, wobei das erste Hohlrad von dem Stift bzw. der Achse getragen wird, und zwar in einem Bereich, der zwischen der Stelle des Stiftes bzw. der Achse angeordnet ist, in der diese im Gehäuse fest aufgenommen wird, und dem Bereich, in dem die Achse bzw. der Stift mittels des (ersten) Blechs gelagert ist. Gemäß einer zu bevorzugenden Gestaltung ist vorgesehen, dass zwischen den Antriebsmodul und dem Betätigungsmodul oder zwischen dem Betätigungsmodul und dem Getriebegehäuse eine Einrichtung für eine Referenzierung bzw. zur Bildung einer Kulisse vorgesehen ist.

Die Einrichtung zum Ermöglichen einer Referenzierung bzw. zur Bildung einer Kulisse kann - wie angesprochen ― beispielsweise zwischen dem Antriebsmodul und dem Betätigungsmodul angeordnet sein. Dies kann beispielsweise so sein, dass an dem Betätigungsmodul bzw. der Schaltwelle ein Ansatz vorgesehen ist, der sich beispielsweise im wesentlichen radial erstreckt. Der Ansatz kann beispielsweise so ausgebildet sein, dass er auf einander gegenüberliegenden Seiten radial außen von Begrenzungen begrenzt wird, die parallel verlaufen, wobei ein im Umfangsrichtung gelegenes Ende der einen Begrenzung mit einem dieser einen Begrenzung in Umfangsrichtung zugewandten Ende der anderen Begrenzung radial außen über einen Kreisbogen verbunden ist. Der Ansatz kann beispielsweise scheibenförmig ausgebildet sein. Der Ansatz sitzt vorteilhafterweise fest an der Schaltwelle, so dass auch der Ansatz verdreht wird, wenn die Schaltwelle verdreht wird, bzw. so dass die Schaltwelle in Drehrichtung blockiert, wenn der Ansatz blockiert. Jeweils benachbart zu den beiden gegenüberliegenden parallelen Abschnitten der äußeren Begrenzung des Ansatzes kann ein (zweites) Blech vorgesehen sein, das bzw. die so sind, das diese (zweiten) Bleche in bestimmten Axialstellungen der Schaltwelle ein Verdrehen dieser Schaltwelle über den Ansatz bzw. deren parallel verlaufenden Abschnitte blockiert.

Diese gegenüberliegenden zweiten Bleche, die auch einstückig verbunden sein können, sind vorzugsweise mit Vertiefungen, Durchbrüchen oder Fenstern versehen, in welche der Ansatz in bestimmten Axialstellungen der Schaltwelle einschwenken kann, so dass ein Verdrehen der Schaltwelle ermöglicht wird. Dabei ist insbesondere vorgesehen, dass die Stellungen, in denen ein Verdrehen nicht ermöglicht wird, zwischen jeweils benachbarten Fenstern gelegen ist. Die Fenster können dabei so positioniert sein, dass die Betätigungselemente zum Ein- und Auslegen von Gängen mit den Schaltschienen zusammenwirken können, wenn der Ansatz in ein entsprechendes Fenster einschwenken kann. Es ist also insbesondere vorgesehen, dass über den Ansatz und die (zweiten) Bleche bzw. die darin vorgesehenen Fenster sichergestellt wird, dass die Schaltwelle in einer bestimmten Schwenkstellung bzw. einem bestimmen Schwenkstellungsbereich - insbesondere zum Wählen ― axial verlagert werden kann, und in bestimmten Axialstellungen - insbesondere zum Schalten - verdreht werden kann, während sie in den dazwischen liegenden Axialstellungen nicht verschwenkt werden kann und somit eine Schaltbewegung verhindert wird. Bevorzugt ist ferner, dass die Schaltwelle dann, wenn der Ansatz in ein Fenster eintaucht, axial nicht bzw. nicht nennenswert bewegt werden kann, so dass eine Wählbewegung in diesen Stellungen blockiert wird.

Es kann vorgesehen sein, dass der axiale Verstellbereich der Schaltwelle mittels eines (End)Anschlages begrenzt wird. Dieser (End)Anschlag kann insbesondere ein Anschlag sein, an welcher der angesprochene Ansatz anschlägt, wenn die Schaltwelle ihre dementsprechende Endstellung erreicht hat. Dieser Endanschlag kann beispielsweise auch verwendet werden, um eine Referenzierung zu ermöglichen, und zwar insbesondere eine Referenzierung in Wählrichtung. Es kann beispielsweise auch vorgesehen sein, dass dann, wenn der Ansatz an diesen in axialer Richtung gelegenen Anschlag anschlägt, ein Verdrehen der Schaltwelle nicht möglich ist bzw. dort kein Fenster vorgesehen ist. Hierüber kann auch einer Referenzierung in Schaltrichtung ermöglicht werden.

Bevorzugt ist vorgesehen, dass ein Elektromotor, insbesondere Schaltmotor, vorgesehen ist, der Bestandteil des Antriebsmoduls ist, und dass die Spindel bzw. die Spindel des Antriebsmoduls im wesentlichen parallel zu der Motorausgangswelle dieses Elektromotors bzw. Schaltmotors angeordnet ist. Die angesprochene Spindel ist dabei quer zu ihrer Längserstreckungsrichtung beabstandet zu der Motorausgangswelle des Elektromotors angeordnet. Besonders vorteilhaft ist vorgesehen, dass der Schaltmotor bzw. der Elektromotor innerhalb der Schaltkinematik direkt neben der Spindel angeordnet ist. Hierdurch kann beispielsweise eine kurze Bauweise der Schaltkinematik erreicht werden, die zum Teil in den Getriebeinnenraum hereinragt bzw. zum Teil den Getriebeinnenraum nutzt. Dabei ist insbesondere vorgesehen, dass die Spindel mittels des angesprochenen Schaltmotors bzw. Elektromotors drehend antreibbar ist.

Die Getriebevorrichtung ist in vorteilhafter Ausgestaltung eine 3-Wellen-Getriebevorrichtung.

Diese 3-Wellen-Getriebevorrichtung weist vorteilhafterweise eine Eingangswelle bzw. Antriebswelle, eine erste Hauptwelle sowie eine zu dieser ersten parallel geschaltete zweite Hauptwelle auf. Ferner kann die 3-Wellen-Getriebevorrichtung eine Abtriebs- bzw. Ausgangswelle bzw. ein Differential oder dergleichen aufweisen. Anzumerken ist, dass im Stand der Technik die angesprochenen Hauptwellen häufig als Ausgangswellen bezeichnet werden.

Die innere Getriebeschaltung weist in vorteilhafter Ausbildung Schaltschienen auf. Sie kann beispielsweise auch Schaltgabeln oder dergleichen aufweisen. Die innere Getriebeschaltung kann beispielsweise aus mehreren Endausgangsmechanismen bestehen, die jeweils eine Schaltschiene aufweisen. Die in Endausgangsmechanismen bzw. Schaltschienen sind dabei insbesondere vorbestimmten Gängen jeweils zugeordnet. Diese Gänge, denen die Schaltschienen bzw. die Ausgangsmechanismen zugeordnet sind, sind über die entsprechenden Ausgangsmechanismen bzw. entsprechende Schaltschienen betätigbar.

Vorteilhaft ist dies so, dass über eine betreffende Schaltschiene bzw. einen betreffenden Endausgangsmechanismus entweder genau ein Gang betätigbar ist oder genau zwei Gänge betätigbar sind, wobei insbesondere auch Mischformen derart vorgesehen sind, dass über einzelne Endausgangsmechanismen bzw. Schaltschienen zwei Gänge betätigt werden können und über eine bzw. einem oder mehrere andere genau ein Gang betätigt werden kann. Dies kann auch von der Anzahl der Gänge abhängen, die das Getriebe bzw. Teilgetriebe aufweist.

Die Getriebevorrichtung ist vorzugsweise ein Automatisiertes Schaltgetriebe (ASG) oder eom Doppelkupplungsgetriebe (DKG) bzw. Parallelschaltgetriebe (PSG).

Besonders bevorzugt ist vorgesehen, dass die Betätigung als Rotationsbewegung vom Getriebeaktor auf die Schaltschienen in eine Translationsbewegung gewandelt wird.

Vorzugsweise ist der Getriebeaktor seitlich am Getriebe montiert.

Ferner wird insbesondere eine Getriebevorrichtung gemäß Anspruch 13 bzw. gemäß Anspruch 14 bzw. gemäß Anspruch 16 bzw. gemäß Anspruch 17 vorgeschlagen. Ein erfindungsgemäßer Getriebeaktor ist Gegenstand des Anspruchs 19.

Die durch diese Ansprüche jeweils vorgeschlagenen Gestaltungen können beispielsweise so weitergebildet sein bzw. weiterbildende Merkmale aufweisen, die bereits zuvor erläutert wurden. Dies bezieht sich nicht nur auf die erfindungsgemäßen Getriebevorrichtungen, sondern insbesondere auch auf den erfindungsgemäßen Getriebeaktor, sowie dessen Antriebsmodul und dessen Getriebemodul.

Bevorzugt weist das Antriebsmodul des erfindungsgemäßen Getriebeaktors wenigstens einen Elektromotor auf. Es kann vorgesehen sein, dass das Antriebsmodul einen Wählmotor aufweist, sowie einen Schaltmotor, wobei diese Motoren Elektromotoren sind. Das Antriebsmodul weist vorteilhafter Weise ein Aktorgehäuse auf. Dabei kann vorgesehen sein, dass das Betätigungsmodul nicht an diesem Aktorgehäuse - insbesondere unmittelbar - gehalten bzw. gelagert ist. Es ist wenigstens eine kinematische Schnittstelle gegeben, an welcher diese beiden Module zusammenwirken, wie kinematische Schnittstelle für das Wählen und kinematische Schnittstelle für das Schalten.

Erfindungsgemäß wird ferner insbesondere eine Axial/Radial-Lagereinheit für drehbewegte Teile, wie Spindeln oder Wellen, gemäß Anspruch 20 vorgeschlagen. Die Axial/Radial-Lagereinheit weist genau ein Axialnadellager und genau zwei Anlaufscheiben auf. Bevorzugt weist die Axial/Radial-Lagereinheit ferner einen einseitig offenen Träger auf, der beispielsweise ein Kunststoffträger sein kann.

Vorzugsweise ist das Axialnadellager axial zwischen den beiden Anlaufscheiben angeordnet und steht in Kontakt mit diesen beiden Anlaufscheiben. Das drehbewegte Teil, also insbesondere die Spindel oder Welle, erstreckt sich dabei vorzugsweise durch die beiden Anlaufscheiben sowie das Axialnadellager.

Mit einem jeweiligen radial außen gelegenen Bereich ragen die beiden Anlaufscheiben und gegebenenfalls das Axialnadellager beispielsweise in den Träger bzw. Kunststoffträger. Dies ist insbesondere so, dass radial ein Spiel zwischen den Anlaufscheiben bzw. dem Axialnadellager und dem Kunststoffträger bzw. dem Grund einer Vertiefung, in welche die Anlaufscheiben und das Axialnadellager mit einem radial außen gelegenen Bereich hineinragen, gegeben ist.

Ferner ist insbesondere vorgesehen, dass auch axial ein gewisses Spiel zwischen den Anlaufscheiben und den axial die Vertiefung begrenzenden Wandabschnitten gegeben ist, so dass die Anlaufscheiben und das Axialnadellager drehbeweglich sind. Die Anlaufscheiben und das Axialnadellager sind ferner drehbeweglich gegenüber dem drehbewegten Teil bzw. der Spindel oder Welle. In besonders bevorzugter Ausgestaltung können Kräfte, und zwar insbesondere Axialkräfte von dem drehbewegten Teil über die Einheit aus den beiden Anlaufscheiben und dem Axialnadellager, auf den Kunststoffträger übertragen werden, wobei sich dabei ein Reibschluss bildet. Dies kann beispielsweise so sein, dass beim Übertragen der Kräfte eine der beiden Anlaufscheiben reibschlüssig mit dem drehbewegten Teil verbunden ist und die andere der beiden Anlaufscheiben reibschlüssig mit dem Kunststoffträger verbunden ist. In dem drehbewegten Teil wird insbesondere auch eine Vertiefung gebildet, in welcher die beiden Anlaufscheiben mit einem radial inneren Bereich, in dem ein Durchbruch für die Spindel ausgebildet ist, eingreifen, und zwar so, dass sie axial gesichert sind.

Eine solche Vertiefung in der Spindel bzw. Welle kann beispielsweise so gebildet werden, dass ein Absatz an der Spindel bzw. Welle gegeben ist und auf der dem Absatz abgewandten Seite eine Hülse oder eine Wellenmutter oder ein ähnliches Teil angeordnet ist, welches neben dem Absatz eine zweite axiale Begrenzung der Vertiefung bildet.

Im übrigen kann die Axial-/Radiallagereinheit auch so weitergebildet sein, wie es bereits zuvor und auch im folgenden noch erwähnt wird.

Erfindungsgemäß wird ferner insbesondere ein Verfahren gemäß Anspruch 22 vorgeschlagen.

Dies Verfahren ist ein Verfahren zur Herstellung einer Getriebevorrichtung für ein Kraftfahrzeug, und vorzugsweise zur Herstellung einer erfindungsgemäßen Getriebevorrichtung. Die Getriebevorrichtung, die mittels dieses Verfahrens hergestellt wird, kann beispielsweise eine erfindungsgemäße Getriebevorrichtung sein. Beispielsweise ist diese Getriebevorrichtung eine Drei-Wellen-Getriebevorrichtung. Die Getriebevorrichtung weist mehrere Radsätze für die Bildung von Gängen auf. Für das Ein- und Auslegen von Gängen ist eine innere Getriebeschaltung vorgesehen, sowie ein Getriebeaktor zum Betätigen der inneren Getriebeschaltung. Die Getriebevorrichtung weist ein Getriebegehäuse auf, in welchem die für die Bildung von Gängen vorgesehenen Radsätze aufgenommen werden. Das Verfahren weist zunächst die Schritte der "Herstellung eines Betätigungsmoduls" sowie der "Herstellung eines Antriebsmoduls" auf. Diese beiden Schritte können grundsätzlich in beliebiger zeitlicher Reihenfolge erfolgen, also auch beispielsweise zeitlich überlappend parallel.

Gemäß dem Verfahren ist ferner vorgesehen, dass das Betätigungsmodul am Getriebegehäuse montiert bzw. gelagert wird. Im Hinblick auf beispielhafte Gestaltungen dieses Betätigungsmoduls bzw. dieses Antriebsmoduls wird auf die vorstehenden Ausführungen verwiesen oder auch auf die noch folgenden.

Weiter ist gemäß dem Verfahren vorgesehen, dass das Antriebsmodul am Getriebegehäuse montiert bzw. gelagert wird. Die Montage bzw. die Lagerung des Antriebsmoduls erfolgt nach der Lagerung des Betätigungsmoduls. Es werden also das Betätigungsmodul und das Antriebsmodul separat am Getriebegehäuse gehalten.

Im Gegensatz hierzu ist bei bekannten Vorrichtungen aus dem Stand der Technik vorgesehen, dass der Getriebeaktor im wesentlichen komplett montiert wird und dann in das Getriebegehäuse ein- bzw. angesetzt wird. Dies erfolgt im Stand der Technik beispielsweise so, dass sämtliche Teile des Getriebeaktors in einem Aktorgehäuse montiert werden, und das Aktorgehäuse dann am Getriebegehäuse angebracht, beispielsweise verschraubt wird.

Diese Art der Montage kann beim Stand der Technik dazu führen, dass sehr große Öffnungen im Getriebegehäuse erforderlich sind, um zu ermöglichen, dass die Montierbarkeit sichergestellt ist und die erforderlichen Schnittstellen des Getriebeaktors zur inneren Getriebeschaltung bereitgestellt werden.

Dadurch dass erfindungsgemäß zwei separate Module des Getriebeaktors auch separat am Getriebegehäuse gelagert werden, kann beispielsweise ermöglicht werden, dass das Betätigungsmodul bzw. eine Schaltwelle mit darauf angeordneten Betätigungselementen und gegebenenfalls weiteren Bauteilen, beispielsweise der zuvor beschriebenen Art, im wesentlichen axial durch eine entsprechende Öffnung ins Getriebegehäuse eingeführt und dort gelagert wird. Quer dazu kann dann beispielsweise das Antriebsmodul mit einem oder zwei Elektromotoren, bzw. Wählmotor und Schaltmotor, und einer Übertragungsmechanik, die bis zur Schnittstelle des Antriebsmoduls für das Wählen und für das Schalten reicht, quer zur Längserstreckung der Schaltwelle montiert werden.

Es kann insbesondere auch vorgesehen sein, dass - wie angesprochen - das Betätigungsmodul durch eine Öffnung im Getriebegehäuse im wesentlichen axial eingeführt wird und eine weitere Öffnung im Getriebegehäuse vorgesehen ist, an bzw. in welche das Antriebsmodul eingesetzt wird, so dass ermöglicht wird, dass die entsprechenden Schnittstellen zum Betätigungsmodul erreicht bzw. geschaffen werden.

In vorteilhafter Ausgestaltung wird das Betätigungsmodul vor dem Antriebsmodul am Getriebegehäuse montiert bzw. gelagert. Dies kann aber auch umgekehrt sein.

Im Folgenden werden bevorzugte Ausführungsbeispiele anhand der Figuren näher erläutert. Es zeigt:
Fig. 1 eine der Anmelderin - gegebenenfalls allerdings nur intern - bekannte Getriebevorrichtung, die als 3-Wellen-Getriebevorrichtung -gestaltet ist, mit einem Getriebeaktor;
Fig. 2 eine beispielhafte erfindungsgemäße Getriebevorrichtung, die hier als 3-Wellen-Getriebevorrichtung gestaltet ist, mit einem beispielhaften erfindungsgemäßen Getriebeaktor;
Fig. 3 die Funktionseinheit des Getriebeaktors 42 der in Fig. 2 gezeigten Gestaltung in separater Darstellung, wobei dieser Getriebeaktor aus den Einzelkomponenten "Betätigungsmodul " und "Antriebsmodul " besteht;
Fig. 4 das Betätigungsmodul des in Fig. 3 gezeigten Getriebeaktors bzw. die Komponenten dieses Betätigungsmoduls;
Fig. 5 eine Ansicht auf den Schaltmotor sowie den Wählmotor des Getriebeaktors der in Fig. 2 gezeigten Gestaltung von der Getriebegehäuseaußenseite;
Fig. 6 einen Schnitt entlang der Linie VI-VI aus Fig. 5;
Fig. 7 einen Schnitt entlang der Linie VII-VII aus Fig. 5;
Fig. 8 eine weitere Ansicht des Antriebsmoduls, die im Wesentlichen eine Ansicht der Gestaltung gemäß Fig. 3 von rechts ist, die - bezogen auf Fig. 3 - geringfügig in die Bildebene hineingeschwenkt ist;
Fig. 9 einen vergrößerten Ausschnitt aus Fig. 7 im Bereich der dortigen Axial-/Radiallagereinheit 116; und
Fig. 10 einen vergrößerten, leicht geschwenkten Ausschnitt aus Fig. 3;

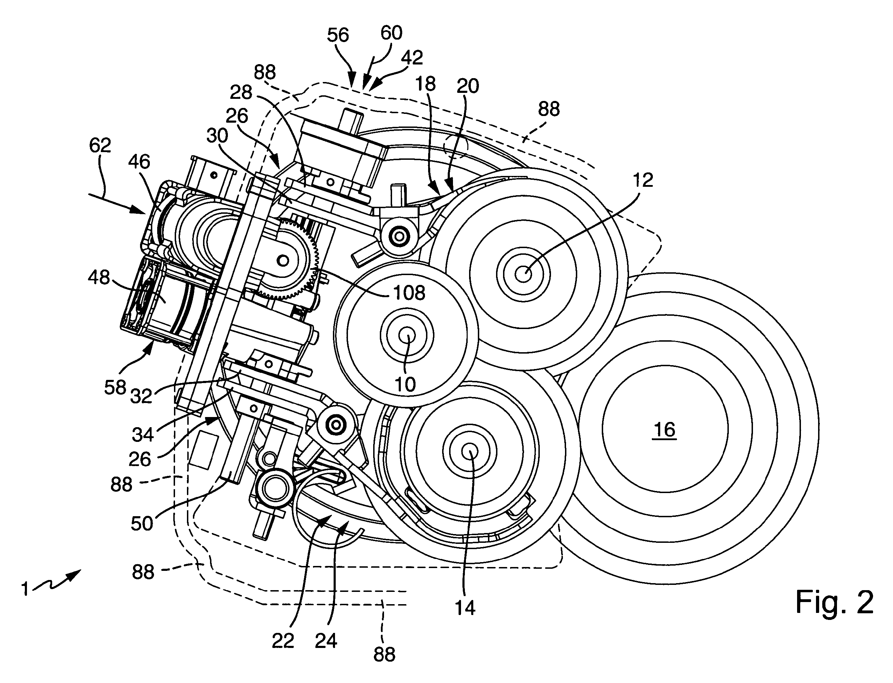

Die Fig. 2 bis 10 zeigen ein beispielhaftes erfindungsgemäßes 3-Wellen-Getriebe bzw. eine beispielhafte erfindungsgemäße 3-Wellen-Getriebevorrichtung 1 mit einem beispielhaften erfindungsgemäßen Getriebeaktor 42 in schematischen Ansichten bzw. Teilansichten.

Die 3-Wellen-Getriebevorrichtung 1 weist eine Antriebswelle 10, eine erste Hauptwelle 12, eine zweite Hauptwelle 14 auf. Die 3-Wellen-Getriebevorrichtung 1 kann so in einem Antriebsstrang eines Kraftfahrzeuges verbaut werden, dass die Antriebswelle 10 auf der der Brennkraftmaschine zugewandten Seite und die beiden Hauptwellen 12, 14 auf der den Antriebsachsen des Fahrzeugs zugewandten Seite angeordnet sind. Weiter ist eine Abtriebswelle 16 gegeben, die von den beiden Hauptwellen 12, 14 verschieden ist und im jeweiligen Drehmomentfluss auf der der Antriebswelle 10 abgewandten Seite der beiden Hauptwellen 12, 14 angeordnet ist. Die Abtriebswelle 16 kann beispielsweise ein Differential sein, bzw. eine Welleneinrichtung mit Differential. Die Abtriebswelle 16 kann in einer Variante auch als Welle gesehen werden, die nicht dem 3-Wellen-Getriebevorrichtung 1 zugeordnet ist.

Die 3-Wellen-Getriebevorrichtung 1 weist ferner zur Bildung von Gängen mehrere Radsätze 18, 20, 22, 24 auf. Die Anzahl Radsätze entspricht der Anzahl der einlegbaren Gänge; es ist insbesondere vorgesehen ist, dass ein Rückwärtsgang und mehrere Vorwärtsgänge, wie beispielsweise vier Vorwärtsgänge oder fünf Vorwärtsgänge oder sechs Vorwärtsgänge oder sieben Vorwärtsgänge schaltbar sind. Die Anzahl der schaltbaren Gänge kann aber auch abweichend von den vorgenannten beispielhaften Zahlen sein.

Im Ausführungsbeispiel ist vorgesehen, dass mehrere Radsätze 18,20 der ersten Hauptwelle 12 zugeordnet sind und mehrere Radsätze 22, 24 der zweiten Hauptwelle 14 zugeordnet sind. Eines der Zahnräder der jeweiligen Radsätze 18, 20, die der ersten Hauptwelle 12 zugeordnet sind, wird jeweils von der ersten Hauptwelle 12 getragen. Dies ist so, dass das entsprechende Zahnrad jeweils drehbeweglich auf dieser ersten Hauptwelle 12 angeordnet ist und mittels Gangkupplungen, Schiebemuffen oder dergleichen drehfest mit der ersten Hauptwelle 12 zum Einlegen eines Ganges gekoppelt werden kann.

In entsprechender Weise wird jeweils ein Zahnrad der Radsätze 22, 24, die der zweiten Hauptwelle 14 zugeordnet sind, von der zweiten Hauptwelle 14 getragen und ist dort drehbeweglich gegenüber der zweiten Hauptwelle 14 angeordnet. Dieses jeweils drehbeweglich angeordnete Zahnrad kann mittels Gangkupplungen, Schiebemuffen oder dergleichen jeweils drehfest mit der zweiten Hauptwelle 14 zum Einlegen eines Ganges gekoppelt werden.

Das 3-Wellen-Getriebe 1 weist eine innere Getriebeschaltung 26 auf.

Es sind Schaltschienen 28, 30, 32, 34 vorgesehen, die insbesondere Bestandteil der inneren Getriebeschaltung 26 sind. Ein Teil dieser Schaltschienen 28, 30, 32, 34 - im Ausführungsbeispiel sind dies die beiden Schaltschienen 28 und 30 - sind zum Ein- und Auslegen von Gängen vorgesehen, die der ersten Hauptwelle 12 zugeordnet sind, und ein Teil der angesprochenen Schaltschienen 28, 30, 32, 34 - im Ausführungsbeispiel dies die beiden Schaltschienen 32, 34 - sind für das Ein- bzw. Auslegen von Gängen vorgesehen, die der zweiten Hauptwelle 14 zugeordnet sind.

Die 3-Wellen-Getriebevorrichtung 1 weist ferner eine Betätigungseinrichtung 42 auf, die ein Getriebeaktor ist. Der Getriebeaktor weist auf bzw. besteht aus zwei separaten Funktionsmodulen, von denen eines ein Betätigungsmodul 56 und von denen das andere ein Antriebsmodul 58 ist.

In Fig. 2 ist die beispielhafte erfindungsgemäße Gestaltung im montierten Zustand gezeigt. Dabei ist der Getriebeaktor 42 am Getriebe bzw. am Getriebegehäuse 88 der Getriebeeinrichtung 1 montiert bzw. gelagert.

Durch die Pfeile 60, 62 sind schematisch die Montageeinrichtungen der beiden Einzelkomponenten "Betätigungsmodul 56" und "Antriebsmodul 58" symbolisiert, wobei diese vorzugsweise nur in der angegebenen Reihenfolge moniert werden können. Der Pfeil 60 symbolisiert dabei die Montagerichtung des Betätigungsmoduls 56 und der Pfeil 62 symbolisiert dabei die Montagerichtung des Antriebsmoduls 58.

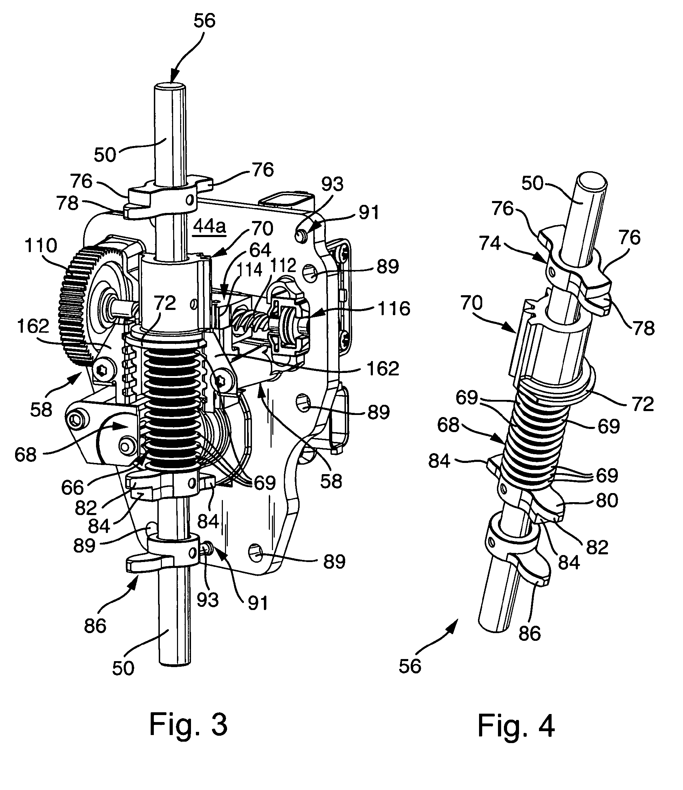

Fig. 3 zeigt separat die Funktionseinheit des Getriebeaktors 42, der aus den beiden Einzelkomponenten "Betätigungsmodul 56" und "Antriebsmodul 58" besteht. Das Betätigungsmoduls 56 des in Fig. 3 gezeigten Getriebeaktors 42 bzw. die Komponenten dieses Betätigungsmoduls 56 sind in Fig. 4 gezeigt.

Zwischen dem Betätigungsmodul 56 und dem Antriebsmodul 58 bzw. im Übergangsbereich zwischen diesen beiden Modulen 56, 58 existiert eine kinematische Schnittstelle für das Schalten und eine kinematische Schnittstelle für das Wählen. Die kinematische Schnittstelle zum Schalten ist in Fig. 3 mit dem Bezugszeichen 64 versehen und die kinematische Schnittstelle zum Wählen ist in Fig. 3 mit dem Bezugszeichen 66 versehen.

Im folgenden soll nun - insbesondere Bezug nehmend auf Fig. 4 - auf die Komponenten des Betätigungsmoduls 56 eingegangen werden:

Das Betätigungsmodul 56 weist eine Welle bzw. Schaltwelle 50 auf, die mit einer (ersten) Zahnstange 68 versehen ist. Die (erste) Zahnstange 68 erstreckt sich in Längsrichtung der Schaltwelle 50 und wird von mehreren in Längsrichtung der Schaltwelle 50 beabstandeten, - beispielsweise jeweils umfangsmäßig geschlossenen - Zähnen 69 gebildet. Die (erste) Zahnstange 68 ist für die Wählkinematik 101 vorgesehen. Sie bildet einen Bestandteil der Schnittstelle für das Wählen 66 zwischen dem Betätigungsmodul 56 und dem Antriebsmodul 58. Das Betätigungsmodul 56 weist ferner ein Zahnradsegment 70 mit einem Ansatz 72 auf. Der Ansatz 72 dient dazu, um eine Referenzierung des Schaltschemas zu ermöglichen und / oder als Bestandteil einer Schaltkulisse. Anstelle eines derartigen Ansatzes 72 kann aber alternativ ein anders ausgebildetes Teil vorgesehen sein, mittels welchem eine Referenzierung des Schaltschemas zu ermöglicht und / oder eine Schaltkulisse gebildet wird. Es kann aber auch alternativ vorgesehen sein, dass das Betätigungsmodul 56 frei von einem derartigen Teil, wie Ansatz 72, ist.

Das Zahnradsegment 70 ist so gestaltet bzw. angeordnet, dass die Zähne im Umfangsrichtung der Schaltwelle 50 beabstandet sind und sich jeweils im Wesentlichen in Längsrichtung der Schaltwelle 50 erstrecken. Das Zahnradsegment 70 ist für die Schaltkinematik 100 vorgesehen. Das Zahnradsegment 70 ist Bestandteil der Schnittstelle 64 zwischen dem Betätigungsmodul 56 und dem Antriebsmodul 58 für das Schalten.

Das Betätigungsmodul 56 weist ferner Betätigungselementeinrichtungen bzw. Betätigungselemente 74, 80, 86 auf. Mittels dieser Betätigungselemente 74, 80, 86 kann auf die Endausgangsmechanismen bzw. die Schaltschienen 28, 30, 32, 34 zum Ein- und Auslegen von Gängen eingewirkt werden.

Die Betätigungselementeinrichtung bzw. das Betätigungselement 74 ist ein kombiniertes Betätigungselement aus einem oder mehreren Nebenbetätigungselementen 76 und einem Hauptbetätigungselement 78. Die Betätigungselementeinrichtung bzw. das Betätigungselement 74 kann beispielsweise einstückig ausgebildet sein.

Die Betätigungselementeinrichtung bzw. das Betätigungselement 80 ist ebenfalls ein kombiniertes Betätigungselement aus einem Hauptbetätigungselement 82 und einem oder mehreren Nebenbetätigungselementen 84. Die Betätigungselementeinrichtung bzw. das Betätigungselement 80 kann beispielsweise einstückig ausgebildet sein.

Die angesprochenen Haupt- 78, 82 und Nebenbetätigungselemente 76, 84 sind Bestandteil eines Active-Interlock-Mechanismus. Diesbezüglich wird auf die einleitenden Erläuterungen zum Active-Interlock verwiesen. Das Active-Interlock kann beispielsweise in der Gestaltung gemäß dem Ausführungsbeispiel beispielsweise so weitergebildet und/oder ausgestaltet sein, wie es eingangs in dieser vorliegenden Offenbarung erläutert wurde, und zwar insbesondere auch in Bezug bekannte Gestaltungen erläutert wurde.

Die Hauptbetätigungselemente 78, 82 sind als Schaltfinger ausgebildet. Die Nebenbetätigungselemente 76, 84 sind als Doppelflügel ausgebildet.

Das Getriebe bzw. innere Getriebe mit der Eingangswelle 10 und den Hauptwellen 12, 14 sowie der inneren Getriebeschaltung 26 weist ein Getriebegehäuse 88 auf bzw. ist in einem Getriebegehäuse 88 aufgenommen, das in Fig. 2 schematisch und teilweise durch zwei die Wandbegrenzungen schematisierenden gestrichelte Linien teilweise dargestellt ist. Zusätzlich kann der Getriebeaktor 42 ein Aktorgehäuse 44 aufweisen, welches beispielsweise auch eine - gegebenenfalls zusätzliche - Stützfunktion für Bauteile des Aktors 42 aufweisen kann.

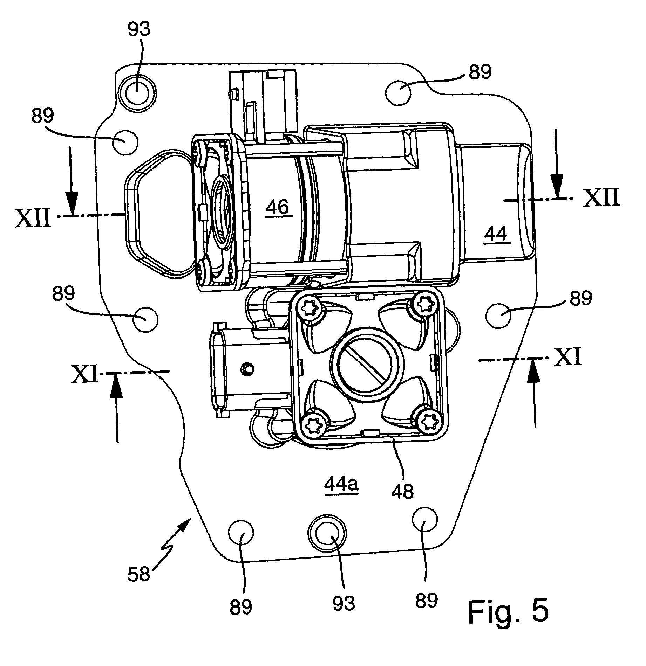

Fig. 5 zeigt eine Ansicht auf den Schaltmotor 46 sowie den Wählmotor 48 von der Getriebegehäuseaußenseite (vgl. Fig. 2).

Fig. 5 kann ferner entnommen werden, dass das Aktorgehäuse 44 einen Fortsatz 44a aufweist, der hier plattenförmig ausgebildet ist. Der Fortsatz 44a kann beispielsweise einstückig mit dem Aktorgehäuse 44 verbunden bzw. ausgebildet sein. Anstelle eines solchen plattenförmigen Fortsatzes 44a kann beispielsweise auch ein haubenförmiger Fortsatz vorgesehen sein. Es kann aber beispielsweise auch vorgesehen sein, dass das Aktorgehäuse 44 eine abgewandelte Form aufweist, und frei von einem Fortsatz ist.

Der Fortsatz 44a weist mehrere (erste) Bohrungen bzw. Durchgangsbohrungen 89 für die Aufnahme von Schrauben auf. Mittels dieser Schrauben 91 ist das Aktorgehäuse 44 bzw. das Antriebsmodul 58 am Getriebegehäuse 88 gelagert bzw. montiert. Anstelle einer derartigen Befestigungseinrichtung für das Antriebsmodul 58 kann allerdings auch eine anders gestaltete Befestigungseinrichtung für das Antriebsmodul 58 vorgesehen sein.

Es kann vorgesehen sein, dass das Aktorgehäuse 44 bzw. dessen Fortsatz 44a mehrere, insbesondere zwei, zweite Bohrungen bzw. Durchgangsbohrungen 93 für die Aufnahme von Zentrierstiften 91 aufweist. Mittels dieser Zentrierstifte 91 kann eine spielbedingte Abweichung zwischen der angestrebten und der tatsächlichen Position des Antriebsmoduls 58 bzw. des Aktorgehäuses 44 bzw. dessen Fortsatz 44a am Getriebegehäuse 88 reduziert oder vermieden werden. Stattdessen können aber auch beispielsweise Zentrierabsätze oder dergleichen vorgesehen sein.

Das Betätigungsmodul 56 ist separat von dem Antriebsmodul 58 an dem Getriebegehäuse 88 gelagert. Vorteilhafterweise sind für das Betätigungsmodul 56, einerseits, und für das Antriebsmodul 58, andererseits, separate Öffnungen im Getriebegehäuse 88 vorgesehen.

Es kann vorgesehen sein, dass das Aktorgehäuse 44 bzw. dessen Fortsatz 44a gleichzeitig als Deckel zum zumindest teilweisen Verschließen der Öffnung des Getriebegehäuses 88 dient, durch welche das Antriebsmodul 58 in das Getriebegehäuse 88 eingesetzt ist. Das Antriebsmodul 58 ist - wie beispielsweise Fig. 2 zeigt - teilweise innerhalb und teilweise außerhalb des Getriebegehäuses 88 positioniert. Das Aktorgehäuse 44 bzw. dessen Fortsatz 44a bzw. der angesprochene Deckel kann beispielsweise lösbar am des Getriebegehäuses 88 montiert bzw. fixiert sein.

Das Betätigungsmodul 56 bzw. die Schaltwelle 50 ist vollständig im Getriebegehäuse 88 positioniert. Alternativ kann aber beispielsweise auch vorgesehen sein, dass das Betätigungsmodul 56 bzw. die Schaltwelle 50 endseitig auf einer oder beiden Seiten der Schaltwelle 50 aus dem Getriebegehäuse 88 herausragt.

Das Betätigungsmodul 56 bzw. die Schaltwelle 50 axial verschieblich und drehbeweglich gelagert. Das Betätigungsmodul 56 bzw. die Schaltwelle 50 ist am Getriebegehäuse 88 gelagert. Hierzu kann auch vorgesehen sein, dass am Getriebegehäuse 88 ein oder mehrere Fortsätze angebracht sind, der bzw. die vom Fortsatz 44a verschieden sind, und an dem bzw. an welchen das Betätigungsmodul 56 bzw. die Schaltwelle 50 gelagert ist; dies kann beispielsweise im Hinblick darauf zweckmäßig sein, dass das Betätigungsmodul 56 bzw. die Schaltwelle 50 axial verschieblich gelagert ist. Solch ein Fortsatz bzw. solche Fortsätze können beispielsweise unmittelbar am Getriebegehäuse 88 bzw. an Wänden oder einer Wand dieses Getriebegehäuses 88 angebracht oder angeformt sein, und sich beispielsweise von dort nach innen erstrecken.

Es ist also insbesondere vorgesehen, dass das Betätigungsmodul 56 bzw. die Schaltwelle 50, einerseits, und das Antriebsmodul 58, anderseits, separat an dem Getriebegehäuse 88 gelagert sind. Dies ist insbesondere so, dass prinzipiell das Betätigungsmodul 56 bzw. die Schaltwelle 50 an dem Getriebegehäuse 88 montiert werden kann bzw. lagerbar ist, ohne dass das Antriebsmodul 58 an diesem Getriebegehäuse 88 gelagert bzw. montiert ist, bzw. umgekehrt. Anzumerken ist allerdings, dass hierdurch zum Ausdruck gebracht werden soll, dass das Betätigungsmodul 56 bzw. die Schaltwelle 50, einerseits, und das Antriebsmodul 58, anderseits, separat am Getriebegehäuse 88 montiert bzw. gelagert sind; Vorgenanntes soll insbesondere nicht bedeuten, dass wahlweise das Betätigungsmodul 56 oder das Antriebsmodul 58 als Getriebeaktor 42 verwendet bzw. verbaut werden kann; zum Getriebeaktor 42 gehören vielmehr sowohl das Betätigungsmodul 56 als auch das Antriebsmodul 58.

Im Gegensatz zu aus dem Stand der Technik bekannten Gestaltung ist beim Ausführungsbeispiel gemäß den Fig. 2 bis 10 - und hierbei handelt es sich um einen von mehreren Aspekten, die einen Unterschied zum Stand der Technik ausmachen ― der Getriebeaktor 42 in zwei separate Funktionsmodule, nämlich ein Antriebsmodul 58 und ein Betätigungsmodul 56, aufgeteilt, wobei insbesondere vorgesehen ist, dass deren Funktion als Gesamtheit nur mit einer entsprechenden Getriebeperipherie möglich ist. Dadurch können - und zwar zumindest in Weiterbildungen - Bauraumlücken variabler genutzt werden. Dass die Funktion als Gesamtheit nur mit einer entsprechenden Getriebeperipherie möglich ist, ist insbesondere so zu verstehen, dass die Getriebeperipherie bzw. eine entsprechende Getriebeperipherie erforderlich ist, damit die Funktion des Aktors sichergestellt ist. Dabei ist insbesondere vorgesehen, dass ohne eine entsprechende Getriebeperipherie die Funktion aus dem Grunde nicht sichergestellt wäre, dass das Antriebsmodul 58 bzw. das Betätigungsmodul 56 nicht hinreichend gehalten würde. Im Gegensatz hierzu ist es bei bekannten Gestaltung möglich, dass der Getriebeaktor seine mittels wenigstens eines Elektromotors erzeugte Ausgangsbewegung, mittels welcher eine innere Getriebeschaltung zum Wählen bzw. Schalten betätigbar ist, erzeugt, ohne dass der Getriebeaktor am Getriebe bzw. am Getriebegehäuse montiert ist.

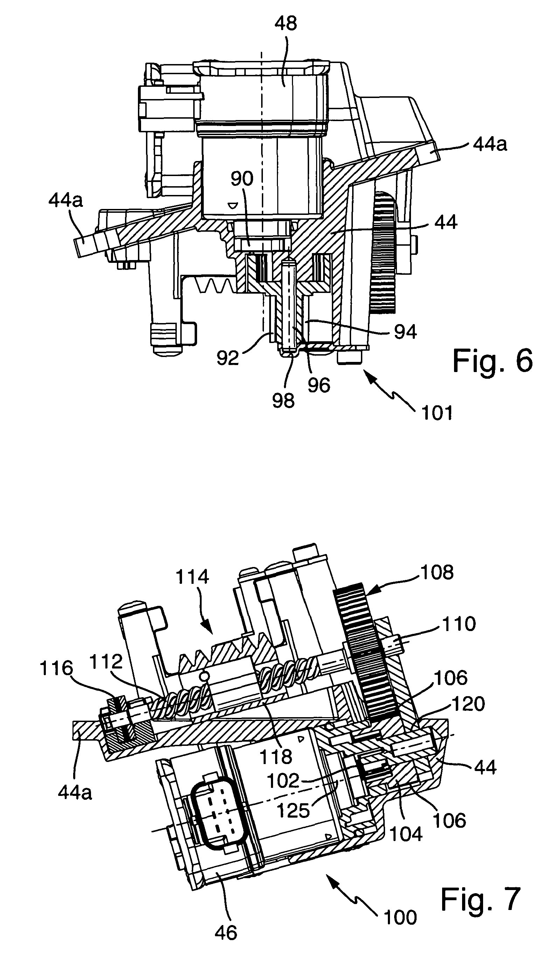

Fig. 6 zeigt einen Schnitt entlang der Linie VI-VI aus Fig. 5, und Fig. 7 zeigt einen Schnitt entlang der Linie VII-VII aus Fig. 5. Die Schnittansicht gemäß Fig. 6 ist ein Schnitt durch die Wählkinematik 101 des Getriebeaktors 42, und der Schnitt gemäß Fig. 7 ist ein Schnitt durch die Schaltkinematik 100 des Getriebeaktors 42.

Die in Fig. 6 gezeigte Wählkinematik 101 weist auf bzw. besteht aus einem Motor bzw. Wählmotor 48 mit (erster) Antriebsverzahnung 90, einem (ersten) Hohlrad 92 mit (erstem) Stirnradfortsatz 94, einem Stift bzw. einer Achse 96 sowie einem (ersten) Blech 98. Der Wählmotor 48 ist bevorzugt ein Elektromotor. Die (erste) Antriebsverzahnung 90, die am Wählmotor 48 vorgesehen ist, kann direkt in die Motorausgangswelle dieses Wählmotors 48 eingebracht sein oder als separate Verzahnung bzw. als separates, verzahntes Teil auf dieser Motorausgangswelle drehfest aufgesetzt sein.

Das (erste) Hohlrad 92 mit dem (ersten) Stirnradfortsatz 94 ist so, dass es eine Innenverzahnung und zur Bildung des (ersten) Stirnradfortsatzes 94 eine hierzu axial versetzte Außenverzahnung ausbildet. Die (erste) Antriebsverzahnung 90 des Wählmotors 48 greift dabei in die angesprochene Innenverzahnung ein und kann somit das (erste) Hohlrad 92, und somit dessen (ersten) Stirnradfortsatz 94, antreiben. Das Zahnrad bzw. (erste) Hohlrad 92 steht mit seinem (ersten) Stirnradfortsatz 94 im Eingriff mit der (ersten) Zahnstange 68 des Betätigungsmoduls 56. Dies ist so, dass der (ersten) Stirnradfortsatz 94 in die (erste) Zahnstange 68 eingreift und somit durch Drehung des (ersten) Hohlrades 92 bzw. dessen (erster) Stirnradfortsatzes 94 die Schaltwelle 50 über den Eingriff des (ersten) Stirnradfortsatzes 94 in die (erste) Zahnstange 68 axial bewegt werden kann.

Das (erste) Hohlrad 92 ist auf dem Stift bzw. der Achse 96 gelagert.

Der Getriebeaktor 42 weist ein Aktorgehäuse 44 auf. In diesem Aktorgehäuse 44 ist der Stift bzw. die Achse 96 auf einer Seite fest gelagert bzw. fest eingepresst. Auf der anderen Seite bildet ein (erstes) Blech 98 die Lagerstelle für den Stift bzw. die Achse 96. Das (erste) Blech 98 ist durch seine gewählte Form radial und axial am Aktorgehäuse 44 fixiert.

Es wird also durch das (erste) Blech 98 eine Lagerfunktion für den Stift bzw. die Achse 96 geschaffen. Der Stift bzw. die Achse 96 nimmt das (erste) Hohlrad 92 nebst (erstem) Stirnradfortsatz 94 drehbeweglich auf.

Die Schaltkinematik 100 (vgl. Fig. 7) weist auf bzw. besteht aus einem Motor 46 (Schaltmotor) mit (zweiter) Antriebsverzahnung 102, einem (zweiten) Hohlrad 104 mit (zweitem) Stirnradfortsatz 106, einem Stirnrad 108, einem Lagerbauteil 110, einer Spindel 112, einer (zweiten) Zahnstange 114 und einer Axial-/Radiallagereinheit 116.

Die (zweite) Antriebsverzahnung 102 des Schaltmotors 46, der bevorzugt ein Elektromotor ist, kann in die Motorausgangswelle dieses Schaltmotors 46 eingebracht sein. Es kann aber auch vorgesehen sein, dass diese (zweite) Antriebsverzahnung 102 beispielsweise in eine Hülse eingebracht ist, die drehfest mit der Motorausgangswelle des Schaltmotors 46 verbunden ist.

Diese (zweite) Antriebsverzahnung 102 wirkt auf die Innenverzahnung des (zweiten) Hohlrades 104 ein, so dass mittels der (zweiten) Antriebsverzahnung 102 bzw. mittels des Schaltmotors 46 das (zweite) Hohlrad 104 drehend angetrieben werden kann. Am (zweiten) Hohlrad 104 ist der (zweite) Stirnradfortsatz 106 axial versetzt bzw. axial überlappend zu der Innenverzahnung des (zweiten) Hohlrades 104 angeordnet.

Der angesprochene (zweite) Stirnradfortsatz 106 des (zweiten) Hohlrades 104 greift in das Stirnrad 108 ein, so dass mittels des (zweiten) Stirnradfortsatzes 106 bzw. mittels des Schaltmotors 46 das Stirnrad 108 drehend angetrieben werden kann.

Das Stirnrad 108 sitzt drehfest auf der Spindel 112, so dass die Spindel 112 mit dem Stirnrad 108 mitgedreht wird, wenn sich dieses Stirnrad 108 dreht.

Auf der Spindel 112 sitzt die (zweite) Zahnstange 114 bzw. eine Spindelmutter 118, an welcher die (zweite) Zahnstange 114 angeordnet ist. Die Spindelmutter 118 kann dabei einstückig mit der (zweiten) Zahnstange 114 ausgebildet sein, oder als separates Teil auf dieser Spindelmutter 118 fixiert sein.

Die Spindel 112 ist im Wesentlichen drehbar und axial im Wesentlichen fest gelagert, so dass durch Verdrehen der Spindel 112 ein axiales Wandern der Mutter 118 bzw. der (zweiten) Zahnstange 114 bewirkt werden kann. Es kann auch vorgesehen sein, dass eine axiale Führung zusätzlich zur Führung der Spindelmutter 118 bzw. der (zweien) Zahnstange 114 vorgesehen ist.

Die (zweite) Zahnstange 114 steht in Eingriff mit dem Zahnradsegment 70, so dass die (zweite) Zahnstange 114 wie auch das Zahnradsegment 70 Bestandteil der zwischen dem Betätigungsmodul 56 und dem Antriebsmodul 58 vorgesehenen (kinematischen) Schnittstelle 64 für das Schalten sind.

Die Spindel 112 ist einerseits mittels des Lagerbauteils 110 und andererseits mittels der Axial/Radial-Lagereinheit 116 gelagert. In der Gestaltung gemäß Fig. 7 sind das Lagerbauteil 110 und die Axial-/Radial-Lagereinheit 116 im Wesentlichen im Bereich der beiden entgegen gesetzten distalen Enden der Spindel 112 angeordnet.

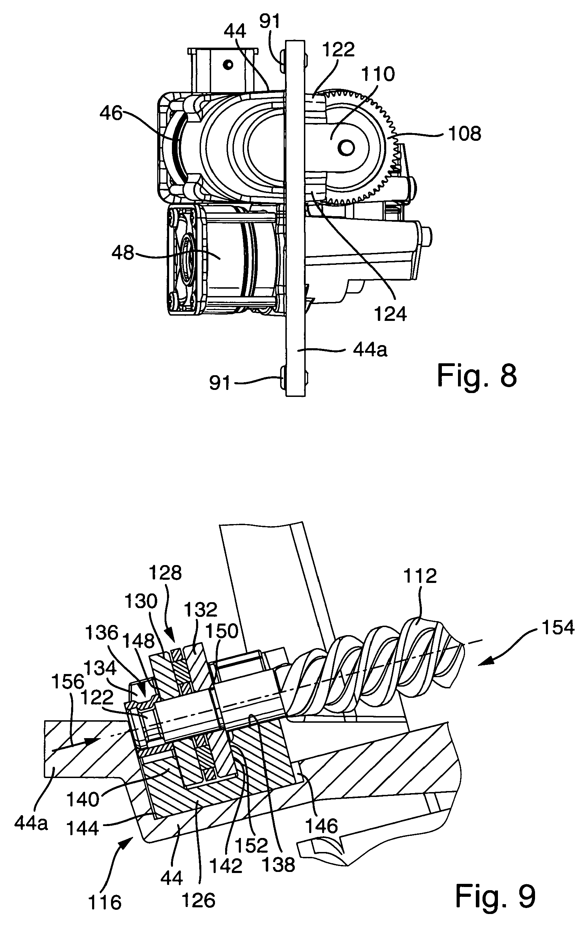

Das Lagerbauteil 110 ist bei dem Ausführungsbeispiel erforderlich bzw. zweckmäßig, weil aufgrund der speziellen Ausführung und Montagereihenfolge der Unterbaugruppe "Spindel 112" eine weit vom Aktorgehäuse 44 entfernt liegende radiale Lagerstelle für die Spindel 112 benötigt wird bzw. zweckmäßig ist. Die Position bzw. die genaue Positionierung der Spindel 112 am bzw. zum Aktorgehäuse 44 wird durch bzw. mittels der Fixierung bzw. Positionierung des Lagerbauteils 110 mit dem Adapterbauteil 120 eingestellt. Das Drehmoment wird mit den Stegen 122, 124 an dem Lagerbauteil 110 abgestützt (vgl. Fig. 8).

Mittels des Lagerbauteils 110 kann beispielsweise erreicht werden, dass eine innen, frei liegende und genaue Lagerstelle ermöglicht wird. Eine solche Gestaltung kann ferner gleichzeitig die Montage sicherstellen bzw. ermöglichen.

Wie Fig. 7 zeigt, ist die Spindel 112 im Wesentlichen parallel und quer zu ihrer Längserstreckungsrichtung beabstandet zu der Motorausgangswelle des Elektromotors bzw. Schaltmotors 46 angeordnet, mittels welchem die Spindel (112) antreibbar ist. Die Längserstreckungsrichtung bzw. Längsachse der Motorausgangswelle des Elektromotors bzw. Schaltmotors 46 bzw. eine hierzu konzentrische Achse ist in Fig. 7 schematisch durch die gestrichelte Linie 125 verdeutlicht.

Gemäß der Gestaltung gemäß Fig. 7 bzw. bei der Ausgestaltung der Schaltkinematik 100 ist der Motor bzw. Schaltmotor 46 direkt neben der Spindel 112 angeordnet. So kann beispielsweise eine kurze Bauweise der Schaltkinematik 100 erreicht werden, die beispielsweise auch zum Teil den Getriebeinnenraum nutzt bzw. in diesen Getriebeinnenraum ragt.

Es kann vorgesehen sein, dass der Motor bzw. Schaltmotor 46, mittels welchem die Spindel 112 antreibbar ist, - vorzugsweise vollständig - axial zwischen den entgegen gesetzten Enden der Spindel 112 gelegen ist.

Fig. 9 zeigt einen vergrößerten Ausschnitt aus Fig. 7 im Bereich der Axial/Radial-Lagereinheit 116.

Die Axial-/Radial-Lagereinheit 116 weist auf bzw. besteht im Wesentlichen aus einem einseitig offenen Träger 126, insbesondere einseitig offener Kunststoffträger 126, einem Axialnadellager 128, einer ersten Anlaufscheibe 130, einer zweiten Anlaufscheibe 132, einer - insbesondere verstemmten - Hülse 134, einer in die Spindel 112 eingebrachten Nut 136, einer Radiallagerlauffläche 138, Axialabstützflächen 140, 142 und Gehäuseabstützflächen 144, 146.

Im Bereich des Außenmantels der Spindel 112 wird eine Vertiefung 148 ausgebildet. Diese Vertiefung 148 wird radial innen durch die Spindel 112 begrenzt und in axialer Richtung einerseits durch den Absatz 150 der Spindel 112 und andererseits durch die Hülse 134. Axial zwischen diesen axialen Begrenzungen der Vertiefung 148 sind die Anlaufscheiben 130, 132, die zueinander axial beabstandet sind, jeweils gefangen. Axial zwischen diesen beiden Anlaufscheiben 130, 132 ist das Axialnadellager 128 angeordnet bzw. gefangen, das sich um die Spindel 112 herum erstreckt.

Der Träger 126, der insbesondere ein Kunststoffträger 126 ist, weist auf seiner der Spindel 112 zugewandten Seite eine Vertiefung 152 auf. In diese Vertiefung 152 erstreckt sich jeweils ein radial außen gelegener Bereich der Anlaufscheiben 130, 132.

Ferner ist zwischen diesen radial außen gelegenen Bereichen der Anlaufscheiben 130, 132 ein Abschnitt des Axiainadellagers 128 gelegen. Die Abstützung der Axialkräfte erfolgt wechselseitig bzw. der Radiallagerkraft entsprechend der in Fig. 9 dargestellten, schwarz umrandeten weißen Pfeile. Die Radiallagerkraft wirkt im Wesentlichen nur in Fig. 9 unten bzw. im unteren Bereich der Spindel 112.

Im Folgenden soll nun erläutert werden, wie die Axiallagerkraft wechselseitig über die Axial-/Radiallagereinheit 116 abgestützt werden kann.

Zunächst sei allerdings angemerkt, dass die Anlaufscheiben 130, 132 jeweils drehbeweglich gegenüber der Spindel 112 und drehbeweglich gegenüber dem (Kunststoff)träger 126 angeordnet sind.

Wenn nun eine äußere Axialkraft, die im Wesentlichen in Richtung des Pfeils 154 wirkt, auf die Spindel 112 wirkt, drückt die Spindel 112 mit ihrem Absatz 150 auf die zweite Anlaufscheibe 132. Die Last der Spindel 112, die axial auf die zweite Anlaufscheibe 132 wirkt, belastet die zweite Anlaufscheibe 132 axial, die dadurch das Axialnadellager 128 belastet, das wiederum axial die erste Anlaufscheibe 130 belastet. Die erste Anlaufscheibe 130 stützt sich im Bereich der Axialabstützfläche 140 dabei an dem (Kunststoff)träger 126 ab, der sich wiederum im Bereich der Gehäuseabstützfläche 144 am Aktorgehäuse 44 abstützt. Unter den angesprochenen Belastungsverhältnissen entsteht im Wesentlichen ein Reibschluss zwischen der Spindel 112 und der zweiten Anlaufscheibe 132 im Bereich des Absatzes 150 der Spindel 112, so dass sich die zweite Anlaufscheibe 132 im Wesentlichen mit der Spindel 112 dreht; ferner entsteht im Wesentlichen ein Reibschluss zwischen der ersten Anlaufscheibe 130 und dem (Kunststoff)träger 126 im Bereich der Axialabstützfläche 140, so dass die erste Anlaufscheibe 130 im Wesentlichen - wie auch der Kunststoffträger 126 - ruht.

Wenn nun auf die Spindel 112 eine Axialbelastung entsprechend der Richtung des Pfeils 156 wirkt, stützt sich die Spindel 112 über die Hülse 134 an der ersten Anlaufscheibe 130 axial ab. Die erste Anlaufscheibe 130 stützt sich wiederum axial an dem Axialnadellager 128 ab, welches entsprechend die zweite Anlaufscheibe 132 axial belastet. Die zweite Anlaufscheibe 132 stützt sich im Bereich der Axialabstützfläche 142 axial an dem (Kunststoff)träger 126 ab, der sich wiederum axial im Bereich der Gehäuseabstützfläche 146 am Aktorgehäuse 44 abstützt.

Die Einheit aus den beiden Anlaufscheiben 130, 132 und dem dazwischen liegenden Axialnadellager 128 ist mit einem gewissen Axialspiel in der Vertiefung 148 sowie mit einem gewissen Axialspiel in der Vertiefung 152. Zum Grund der Vertiefung 152 haben die Anlaufscheiben 132, 130 und selbstverständlich auch das Axialnadellager 128 ein gewisses Spiel, so dass die entsprechenden angesprochenen Verdrehbarkeiten ermöglicht werden.

Wie erläutert ist die Axial-/Radiallagereinheit 116 so ausgeführt, dass sie einen einseitig offenen Kunststoffträger 126 aufweist, bei dem nur ein Axialnadellager 128 und nur zwei Anlaufscheiben 130, 132 benötigt werden.

Bei den Gestaltungen nach dem Stand der Technik (gegebenenfalls interner Stand der Technik der Anmelderin, so dass sich die Anmelderin weitergehenden Schutz vorbehält) sind solche Lager hingegen derart aufgebaut, dass sie zwei Axialnadellager und drei Anlaufscheiben erfordern. Bei den aus dem Stand der Technik bekannten Gestaltungen sind dabei die drei Anlaufscheiben axial beabstandet angeordnet, wobei zwischen jeweils zwei benachbarten Anlaufscheiben jeweils eines der Axialnadellager positioniert ist. Die axial außen liegenden Anlaufscheiben sind dabei im genannten Stand der Technik mit der Lagerschale gekoppelt und die in der Mitte liegende Anlaufscheibe ist dabei mit der Spindel 112 gekoppelt, oder umgekehrt.

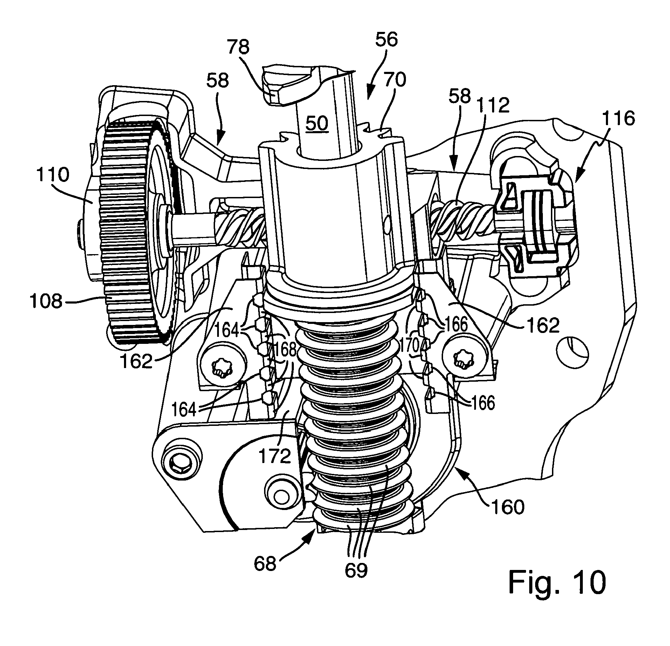

Fig. 10 zeigt einen vergrößerten Ausschnitt aus Fig. 3 in leicht geschwenkter Form. In Fig. 10 ist unter anderem eine Einrichtung bzw. Bauteile gezeigt, die eine Referenzierung des aktorinternen Schaltschemas gewährleisten bzw. eine Kulisse bilden. Diese Einrichtung zum Ermöglichen einer Referenzierung bzw. zur Bildung einer Kulisse ist in Fig. 10 mit dem Bezugszeichen 160 versehen. Die Einrichtung 160 weist den bereits angesprochenen Ansatz 72 auf, der an dem Betätigungsmodul 56 bzw. der Schaltwelle 50 fixiert ist.

Die Einrichtung 160 weist ferner ein (zweites) Blech bzw. zwei (zweite) Bleche 162 auf. Dieses (zweite) Blech bzw. diese (zweiten) Bleche 162 sind an der Antriebseinheit bzw. dem Antriebsmodul 58 fixiert. Es kann vorgesehen sein, dass das bzw. die (zweiten) Bleche 162 am Aktorgehäuse 44 montiert sind. Das (zweite) Blech 162 bzw. die (zweiten) Bleche 162 erstrecken sich auf radial gegenüberliegenden Seiten der Schaltwelle 50. Es kann vorgesehen sein, dass diese Abschnitte, die auf radial gegenüberliegenden Seiten der Schaltwelle 50 angeordnet sind, einstückig verbunden sind, so dass ein (zweites) Blech 162 gegeben ist. Es kann aber auch vorgesehen sein, dass dies - wie oben geschildert - separate (zweite) Bleche 162 sind. Im folgenden wird vorrangig von zwei (zweiten) Blechen 162 gesprochen, ohne dass die Möglichkeit, dass diese als ein (zweites) Blech gestaltet sind, dadurch ausgeschlossen sein soll.

Im (zweiten) Blech 162 sind beidseitig bzw. in den (zweiten) Blechen 162 sind jeweils mehrere Durchbrüche bzw. Fenster 164, 166 vorgesehen. Anzumerken ist, dass anstelle der (zweiten) Bleche 162 auch anders gestaltete Teile, insbesondere Teile des Aktorgehäuses 44, Platten oder auch weniger flach bauende Bauteile vorgesehen sein können, in welchen Durchbrüche bzw. Fenster 164, 166 oder Vertiefungen vorgesehen sind.

Im folgenden wird zur Vereinfachung allerdings von Fenstern 164, 166 gesprochen, wobei anzumerken ist, dass diese insbesondere Durchbrüche sein können, bzw. dass stattdessen auch entsprechende Vertiefungen vorgesehen sein können.

Der Abstand und die Anzahl der Fenster 164, 166 wird durch die Ausführung der Schaltschienen 28, 30, 32, 34 bestimmt bzw. ist hiervon abhängig. Insbesondere ist der Abstand der Fenster 164, 166 vom Abstand der Schaltschienen 28, 30, 32, 34 (zueinander) abhängig.

In die Fenster 164, 166 kann je nach Rotationsrichtung des Betätigungsmoduls 56 bzw. der Schaltwelle 50 der Ansatz 72 einschwenken, sofern dieser höhenmäßig bzw. in Axialrichtung der Schaltwelle 50 bzw. des Betätigungsmoduls 56 auf derselben Ebene wie das betreffende Fenster 164 bzw. 166 steht. In den Bereichen 168, 170 zwischen den Fenstern 164 bzw. 166 ist keine Rotation des Betätigungsmoduls 56 bzw. der Schaltwelle 50 möglich. Gleichmassen ist keine Höhenverstellung bzw. Verstellung in Axialrichtung der Schaltwelle 50 bzw. des Betätigungsmoduls 56 möglich bzw. ein Wählen nicht möglich, wenn der Ansatz 72 in ein Fenster 164 bzw. 166 eingeschwenkt ist. Über diese Begrenzung kann das elektronische Steuergerät bzw. die Steuereinheit, die nicht dargestellt ist und vorzugsweise gegeben ist, das Schaltschema nachvollziehen.

Der Ansatz 72 ist - wie Fig. 10 zeigt - so gestaltet, dass seine radial äußere Begrenzung zwei parallele Abschnitte aufweist, die auf gegenüberliegenden Seiten der Schaltwelle 50 angeordnet sind, und die an einem jeweiligen ihrer Enden außen über einen Kreisbogen verbunden sind. Die einander zugewandten Abschnitte der (zweiten) Bleche 162 sind ebenfalls im Wesentlichen eben gestaltet und durch die angesprochenen Fenster 164, 166 unterbrochen.

Zur Axialbegrenzung der Verstellbarkeit der Schaltwelle 50 bzw. des Betätigungsmoduls 56 ist ein Anschlag 172 vorgesehen, der auch zur Referenzierung verwendet werden kann. In besonders vorteilhafter Ausgestaltung können - was in den Figuren nicht gezeigt ist - alternativ die Bauteile zur Referenzierung des Schaltschemas bzw. zur Schaffung einer Kulisse zwischen dem Getriebe bzw. dem Getriebegehäuse 88 und dem Betätigungsmodul 56 angeordnet werden. Hierzu kann beispielsweise auch vorgesehen sein, dass diese Einrichtung 160, die die Referenzierung des Schaltschemas ermöglicht bzw. eine Kulisse schafft, auf andere Weise gestaltet ist, als es in Fig. 10 gezeigt ist.

Wie gezeigt, ist erfindungsgemäß bzw. gemäß dem Ausführungsbeispiel insbesondere eine Einheit zum automatisierten Wählen und Schalten von Gängen im Getriebe vorgesehen, welche aus einer separaten Antriebs- und einer separaten Betätigungseinheit bzw. entsprechenden Modulen besteht. Die Erfindung bzw. die anhand der zuvor im Rahmen des Ausführungsbeispiels gezeigte Gestaltung ermöglicht eine bessere Ausnutzung von Freiräumen im Fahrzeug, was beispielsweise bzw. insbesondere dann gilt, wenn aufgrund der Bauraumverhältnisse beim Getriebe bzw. bei angrenzenden Teilen der Bauraum, den in der Gestaltung gemäß Fig. 1 das Aktorgehäuse 444 von anderen Bauteilen im Motorraum (des Kraftfahrzeuges) belegt wird. Vorteilhaft kann in gewissen Anwendungen sein, dass es mit der Erfindung möglich ist, im Vergleich zur Gestaltung gemäß Fig. 1 die Schaltwelle von der Anordnung und Funktion her beizubehalten. Weiter bietet die anhand der Figuren erläuterte Gestaltung die Möglichkeit, eine dem Aktorgehäuse 444 aus Fig. 1 entsprechende Funktionseinheit vom Getriebeaktor abzukoppeln und als separate Einheit seitlich (von links entsprechend der Darstellung gemäß Fig. 1) zu montieren.

### Bezuctszeichenliste

- 1: 3-Wellen-Getriebe
- 10: Antriebswelle
- 12: erste Hauptwelle
- 14: zweite Hauptwelle
- 16: Abtriebswelle
- 18: Radsatz
- 20: Radsatz
- 22: Radsatz
- 24: Radsatz
- 26: innere Getriebeschaltung
- 28: Schaltschiene
- 30: Schaltschiene
- 32: Schaltschiene
- 34: Schaltschiene
- 42: Betätigungseinrichtung bzw. Getriebeaktor bzw. Getriebeaktorik
- 44: Aktorgehäuse
- 44a: plattenförmiger Fortsatz von 44
- 46: Schaltmotor
- 48: Wählmotor
- 50: (Schalt)Welle von 56
- 56: Betätigungsmodul
- 58: Antriebsmodul
- 60: Pfeil (Montagerichtung von 56)
- 62: Pfeil (Montagerichtung von 58)
- 64: kinematische Schnittstelle zum Schalten
- 66: kinematische Schnittstelle zum Wählen
- 68: Zahnstange von 56
- 69: Zähne von 68
- 70: Zahnradsegment von 56
- 72: Ansatz von 56
- 74: Betätigungselement
- 76: Nebenbetätigungselement
- 78: Hauptbetätigungselement
- 80: Betätigungselement
- 82: Hauptbetätigungselement
- 84: Nebenbetätigungselement
- 86: Betätigungselement
- 88: Getriebegehäuse
- 89: (erste) Bohrung bzw. Durchgangsbohrung in 44a
- 90: (erste) Antriebsverzahnung von 48
- 91: Zentrierstifte
- 92: (erstes) Hohlrad
- 93: zweite Bohrungen bzw. Durchgangsbohrungen in 44a für Aufnahme von 91
- 94: (erster) Stirnradfortsatz von 92
- 96: Stift bzw. Achse
- 98: (erstes) Blech
- 100: Schaltkinematik
- 101: Wählkinematik
- 102: (zweite) Antriebsverzahnung von 46 von 100
- 104: (zweites) Hohlrad von 100
- 106: (zweiter) Stirnradfortsatz von 104
- 108: Stirnrad von 100
- 110: Lagerbauteil von 100
- 112: Spindel von 100
- 114: Zahnstange von 100
- 116: Axial-/Radiallagereinheit von 100
- 118: Spindelmutter
- 120: Adapterbauteil
- 122: Steg
- 124: Steg
- 125: Längserstreckungsrichtung bzw. Längsachse der Motorausgangswelle von 46
- 126: (Kunststoff)Träger von 116
- 128: Axialnadellager von 116
- 130: erste Anlaufscheibe von 116
- 132: zweite Anlaufscheibe von 116
- 134: Hülse von 116
- 136: Nut in 112 von 116
- 138: Radiallagerlauffläche von 116
- 140: Axialabstützfläche von 116
- 142: Axialabstützfläche von 116
- 144: Gehäuseabstützfläche von 116
- 146: Gehäuseabstützfläche von 116
- 148: Vertiefung von 112 und 134
- 150: Absatz von 112
- 152: Vertiefung in 126
- 154: Pfeil
- 156: Pfeil
- 160: Einrichtung zum Ermöglichen einer Referenzierung bzw. zur Bildung einer Kulisse
- 162: (zweites) Blech
- 164: Fenster
- 166: Fenster
- 168: Bereich zwischen 164
- 170: Bereich zwischen 166
- 172: Anschlag
- 400: 3-Wellen-Getriebe
- 410: Antriebswelle
- 412: erste Hauptwelle
- 414: zweite Hauptwelle
- 416: Abtriebswelle
- 418: Radsatz
- 420: Radsatz
- 422: Radsatz
- 424: Radsatz
- 426: innere Getriebeschaltung
- 428: Schaltschiene
- 430: Schaltschiene
- 432: Schaltschiene
- 434: Schaltschiene
- 436: Schaltschienenpaar
- 440: Schaltschienenpaar
- 442: Getriebeaktor bzw. Getriebeaktorik
- 444: Aktorgehäuse
- 446: Motor
- 448: Motor
- 450: Schaltwelle
- 452: Betätigungselement
- 454: Betätigungselement
- 488: Getriebegehäuse

## Patentansprüche

1. Getriebevorrichtung für Kraftfahrzeuge, wobei die Getriebevorrichtung (1) mehrere Radsätze (18, 20, 22, 24) für die Bildung von Gängen aufweist, und wobei die Getriebevorrichtung (1) für das Einlegen und Auslegen von Gängen eine innere Getriebeschaltung (26) sowie einen Getriebeaktor (42) zum Betätigen der inneren Getriebeschaltung (26) aufweist, und wobei die Getriebevorrichtung (1) ein Getriebegehäuse (88) aufweist, in welchem die für die Bildung von Gängen vorgesehenen Radsätze (18, 20, 22, 24) aufgenommen werden, **dadurch gekennzeichnet, dass** der Getriebeaktor (42) zwei separate Funktionsmodule (56, 58) aufweist, von denen ein erstes ein Antriebsmodul (58) ist und von denen ein zweites ein Betätigungsmodul (56) ist, wobei das Antriebsmodul (58) zumindest eine, insbesondere elektronisch steuerbare, Antriebseinrichtung (46), wie Elektromotor (46 bzw. 48), aufweist und wobei das Betätigungsmodul (56) beim Ein- und Auslegen von Gängen im Kraftfluss zwischen dem Antriebsmodul (58) und der inneren Getriebeschaltung (26) ist, und wobei das Betätigungsmodul (56) und das Antriebsmodul (58) separat an dem Getriebegehäuse (88) gelagert sind.

2. Getriebevorrichtung nach Anspruch 1, **dadurch gekennzeichnet, dass** für die Übertragung von Antriebsbewegungen vom Antriebsmodul (58) an das Betätigungsmodul (56) eine kinematische Schnittstelle zum Schalten ausgebildet wird, sowie eine kinematische Schnittstelle zum Wählen.

3. Getriebevorrichtung nach einem der vorangehenden Ansprüche, **dadurch gekennzeichnet, dass** das Betätigungsmodul (56) ein Zahnradsegment (70) aufweist, über welches Kräfte für das Schalten von dem Antriebsmodul (58) auf das Betätigungsmodul (56) übertragbar ist, sowie eine erste Zahnstange (68), über welche Kräfte für das Wählen von dem Antriebsmodul (58) auf das Betätigungsmodul (56) übertragbar ist, und mehrere Betätigungselemente (74, 76, 78, 80, 82, 84, 86), über welche Kräfte für das Ein- und Auslegen von Gängen von dem Betätigungsmodul (56) auf die innere Getriebeschaltung (26) übertragbar sind.

4. Getriebevorrichtung nach Anspruch 3, **dadurch gekennzeichnet, dass** das Antriebsmodul (58) ferner eine Schaltwelle (50) aufweist, die das Zahnradsegment (70), die erste Zahnstange (68) sowie die Betätigungselemente (74, 76, 78, 80, 82, 84, 86) trägt.

5. Getriebevorrichtung nach einem der vorangehenden Ansprüche, **dadurch gekennzeichnet, dass** das Antriebsmodul (58) für das Bereitstellen von auf das Betätigungsmodul (56) einwirkenden Betätigungskräften zum Schalten einen Schaltmotor (46) aufweist, dessen Motorausgangswelle mit einer (zweiten) Antriebsverzahnung (102) versehen ist, sowie ein (zweites) Hohlrad (104), das mit einem zweiten Stirnradfortsatz (106) versehen ist, und ein Stirnrad (108), eine Spindel (112), eine zweite Zahnstange (114) bzw. eine mit einer zweiten Zahnstange (114) versehene Spindelmutter (118), ein Lagerbauteil (110) für die Lagerung der Spindel (112) sowie eine Axial-/Radiallagereinheit (116) für die Lagerung der Spindel (112).

6. Getriebevorrichtung nach Anspruch 5, **dadurch gekennzeichnet, dass** die an der Motorausgangswelle des Schaltmotors (46) vorgesehene (zweite) Antriebsverzahnung (102) in das (zweite) Hohlrad (104) eingreift und der an diesem (zweiten) Hohlrad (104) vorgesehen zweite Stirnradfortsatz (106) in das Stirnrad (108) eingreift, wobei dieses Stirnrad (108) drehfest auf der Spindel (112) angeordnet ist und wobei diese Spindel (112) drehbeweglich und axialfest gelagert ist, und dass eine zweite Zahnstange (114) bzw. eine mit einer zweiten Zahnstange (114) versehene Spindelmutter (118) auf der Spindel (112) angeordnet ist, wobei zur Lagerung der Spindel (112) einerseits das Lagerbauteil (110) und andererseits die Axial-/Radiallagereinheit (116) vorgesehen ist.

7. Getriebevorrichtung nach einem der Ansprüche 5 und 6, **dadurch gekennzeichnet, dass** die zweite Zahnstange (114) in das Zahnradsegment (70) des Antriebsmoduls (58) eingreift.

8. Getriebevorrichtung nach einem der vorangehenden Ansprüche, **dadurch gekennzeichnet, dass** das Betätigungsmodul (56) für das Bereitstellen von auf das Antriebsmodul (58) einwirkenden Betätigungskräften zum Wählen einen Wählmotor (48) aufweist, dessen Motorausgangswelle mit einer (ersten) Antriebsverzahnung (90) versehen ist, sowie ein (erstes) Hohlrad (92), das mit einem ersten Stirnradfortsatz (94) versehen ist, und einen Stift bzw. eine Achse (96), der bzw. die das (erste) Hohlrad (92) trägt, sowie ferner ein (erstes) Blech (98) zur Bildung einer Lagerstelle für den Stift bzw. die Achse (96).

9. Getriebevorrichtung nach Anspruch 8, **dadurch gekennzeichnet, dass** die an der Motorausgangswelle des Wählmotors (48) vorgesehene (erste) Antriebsverzahnung (90) in das (erste) Hohlrad (92) eingreift, und dass ein Aktorgehäuse (44) vorgesehen ist, mit welchem der Stift bzw. die Achse (96) in seinem bzw. ihrem einen Endbereich fest verbunden ist, wobei insbesondere vorgesehen ist, dass der Stift bzw. die Achse (96) zur Erzeugung dieser festen Verbindung in das Aktorgehäuse (44) eingepresst ist, und wobei der andere Endbereich des Stiftes bzw. der Achse (96) zur Lagerung von dem (ersten) Blech (98) aufgenommen wird, und wobei das (erste) Hohlrad (92) zwischen diesen beiden Endbereichen des Stiftes bzw. der Achse (96) von diesem Stift bzw. von dieser Achse (96) getragen wird.

10. Getriebevorrichtung nach einem der Ansprüche 8 und 9, **dadurch gekennzeichnet, dass** der erste Stirnradfortsatz (94) des (ersten) Hohlrad (92) in die (erste) Zahnstange (68) des Betätigungsmoduls (56) eingreift.

11. Getriebevorrichtung nach einem der vorangehenden Ansprüche, **dadurch gekennzeichnet, dass** zwischen dem Antriebsmodul (58) und dem Betätigungsmodul (56) oder zwischen dem Betätigungsmodul (56) und dem Getriebegehäuse (88) eine Einrichtung (160) zum Ermöglichen einer Referenzierung bzw. zur Bildung einer Kulisse vorgesehen ist.

12. Getriebevorrichtung nach einem der vorangehenden Ansprüche, **dadurch gekennzeichnet, dass** das Antriebsmodul (58) zum Erzeugen von Antriebsbewegungen für das Wählen eine erste elektronisch steuerbare Antriebseinrichtung, wie Wählmotor (48), und zum Erzeugen von Antriebsbewegungen für das Schalten eine zweite elektronisch steuerbare Antriebseinrichtung, wie Schaltmotor (46), aufweist.

13. Getriebevorrichtung für Kraftfahrzeuge, insbesondere nach einem der vorangehenden Ansprüche, wobei die Getriebevorrichtung (1) mehrere Radsätze (18, 20, 22, 24) für die Bildung von Gängen aufweist, und wobei Getriebevorrichtung (1) für das Einlegen und Auslegen von Gängen eine innere Getriebeschaltung (26) sowie einen Getriebeaktor (42) zum Betätigen der inneren Getriebeschaltung (26) aufweist, wobei weiter der Getriebeaktor eine drehbar gelagerte Spindel (112) aufweist, die eine mittels dieser Spindel (112) antreibbare Spindelmutter (118) und / oder (zweite) Zahnstange (114) trägt, sowie einen Elektromotor (46), mittels welchem die Spindel (112) antreibbar ist, **dadurch gekennzeichnet, dass** die Spindel (112) quer zu ihrer Längserstreckungsrichtung (125) beabstandet und im Wesentlichen parallel zu der Motorausgangswelle des Elektromotors (46) angeordnet sind, mittels welchem die Spindel (112) antreibbar ist.

14. Getriebevorrichtung für Kraftfahrzeuge, insbesondere nach einem der vorangehenden Ansprüche, wobei die Getriebevorrichtung (1) mehrere Radsätze (18, 20, 22, 24) für die Bildung von Gängen aufweist, und wobei die Getriebevorrichtung (1) für das Einlegen und Auslegen von Gängen eine innere Getriebeschaltung (26) sowie einen Getriebeaktor (42) zum Betätigen der inneren Getriebeschaltung (26) aufweist, und wobei die Getriebevorrichtung (1) ein Getriebegehäuse (88) aufweist, in welchem die für die Bildung von Gängen vorgesehenen Radsätze (18, 20, 22, 24) aufgenommen werden, wobei ferner ein Aktorgehäuse (44) vorgesehen ist, in welchem der Getriebeaktor (42) zumindest teilweise aufgenommen wird, **dadurch gekennzeichnet, dass** ein Lagerbauteil (110) vorgesehen ist, das an zumindest einem dieser Gehäuse (44, 88), also dem Getriebegehäuse (88) oder dem Aktorgehäuse (44), befestigt ist und das eine von den Begrenzungswänden des Getriebegehäuses (88) und von den Begrenzungswänden des Aktorgehäuses (44) beabstandete Lagerstelle für die Spindel (112) bereitstellt, von welcher die Spindel (112) aufgenommen wird.

15. Getriebevorrichtung nach Anspruch 14, **dadurch gekennzeichnet, dass** ein Adapterbauteil (120) vorgesehen ist, mittels welchem die Position des Lagerbauteils (110) zum bzw. am Aktorgehäuse (44) eingestellt ist.

16. Getriebevorrichtung für Kraftfahrzeuge, insbesondere nach einem der vorangehenden Ansprüche, wobei die Getriebevorrichtung (1) mehrere Radsätze (18, 20, 22, 24) für die Bildung von Gängen aufweist, und wobei Getriebevorrichtung (1) für das Einlegen und Auslegen von Gängen eine innere Getriebeschaltung (26) sowie einen Getriebeaktor (42) zum Betätigen der inneren Getriebeschaltung (26) aufweist, und wobei der Getriebeaktor (42) eine drehbar gelagerte Spindel (112) aufweist, von welcher eine Spindelmutter (118) aufgenommen wird, wobei diese Spindel (112) mittels einer Axial-/Radiallagereinheit (116) gelagert ist, **dadurch gekennzeichnet, dass** das diese Axial-/Radiallagereinheit (116) einen, insbesondere einseitig offenen, Träger (126), insbesondere Kunststoffträger (126) aufweist, sowie genau ein Axialnadellager (128), und genau zwei Anlaufscheiben (130, 132).

17. Getriebevorrichtung für Kraftfahrzeuge, insbesondere nach einem der vorangehenden Ansprüche, wobei die Getriebevorrichtung (1) mehrere Radsätze (18, 20, 22, 24) für die Bildung von Gängen aufweist, und wobei Getriebevorrichtung (1) für das Einlegen und Auslegen von Gängen eine innere Getriebeschaltung (26) sowie einen Getriebeaktor (42) zum Betätigen der inneren Getriebeschaltung (26) aufweist, wobei ferner ein Aktorgehäuse (44) vorgesehen ist, von welchem der Getriebeaktor (42) zumindest teilweise aufgenommen wird, und wobei der Getriebeaktor (42) ein drehbar gelagertes Hohlrad (92) aufweist, **dadurch gekennzeichnet, dass** zur drehbaren Lagerung des Hohlrades (92) eine Achse bzw. ein Stift (96) vorgesehen ist, deren bzw. dessen einer, erster, Endbereich fest von dem Aktorgehäuse (44) aufgenommen wird, und insbesondere in das Aktorgehäuse (44) eingepresst ist, wobei ferner ein bezüglich der Drehachse des Hohlrades (92) axial und radial am Aktorgehäuse (44) fixiertes (erstes) Blech (98) vorgesehen ist, das eine Lagerstelle für den anderen, zweiten Endbereich der Achse bzw. des Stiftes (96) bereitstellt, an der diese Achse bzw. dieser Stift (96) gelagert ist, wobei das Hohlrad (92) zwischen diesem ersten und zweiten Endbereich der Achse bzw. des Stiftes (96) von dieser Achse bzw. diesem Stift (96) aufgenommen ist.

18. Getriebevorrichtung nach einem der vorangehenden Ansprüche, **dadurch gekennzeichnet, dass** die Getriebevorrichtung (1) eine 3-Wellen-Getriebevorrichtung ist

19. Getriebeaktor für eine Kraftfahrzeug-Getriebevorrichtung, und insbesondere für eine Kraftfahrzeug-Getriebevorrichtung (1) gemäß einem der vorangehenden Ansprüche, **dadurch gekennzeichnet, dass** der Getriebeaktor (42) aus einem Antriebsmodul (58) und einem Betätigungsmodul (56) besteht.

20. Axial-/Radiallagereinheit für drehbewegte Teile, wie Spindeln (112) oder Wellen, **dadurch gekennzeichnet, dass** die Axial-/Radiallagereinheit (116) genau ein Axialnadellager (128) und genau zwei Anlaufscheiben (130, 132) aufweist.

21. Axial-/Radiallagereinheit nach Anspruch 20, **dadurch gekennzeichnet, dass** die Axial-/Radiallagereinheit (116) ferner einen einseitig offenen Träger (126), insbesondere Kunststoffträger (126) aufweist.

22. Verfahren zur Herstellung einer Getriebevorrichtung (1) für ein Kraftfahrzeug, und insbesondere zur Montage einer 3-Wellen-Getriebevorrichtung (1), wobei diese Getriebevorrichtung (1) mehrere Radsätze (18, 20, 22, 24) für die Bildung von Gängen aufweist, und wobei Getriebevorrichtung (1) für das Einlegen und Auslegen von Gängen eine innere Getriebeschaltung (26) sowie einen Getriebeaktor (42) zum Betätigen der inneren Getriebeschaltung (26) aufweist, und wobei die Getriebevorrichtung (1) ein Getriebegehäuse (88) aufweist, in welchem die für die Bildung von Gängen vorgesehenen Radsätze (18, 20, 22, 24) aufgenommen werden, mit den Schritten:
- Herstellung eines Betätigungsmoduls (56); und
- Herstellung eines Antriebsmoduls (58) in beliebiger zeitlicher Reihenfolge;
- Montage bzw. Lagerung des Betätigungsmoduls (56) am Getriebegehäuse (88); und
- Montage bzw. Lagerung des Antriebsmoduls (58) am Getriebegehäuse, so dass das Antriebsmodul (58) und das Betätigungsmodul (56) separat am Getriebegehäuse (88) gehalten werden;
wobei das Antriebsmoduls (58) und das Betätigungsmodul (56) Bestandteile des Getriebeaktors (42) sind.

23. Verfahren nach Anspruch 22, **dadurch gekennzeichnet, dass** das Betätigungsmodul (56) vor dem Antriebsmoduls (58) am Getriebegehäuse (88) montiert bzw. gelagert wird.

24. Verfahren nach einem der Ansprüche 22 und 23, **dadurch gekennzeichnet, dass** die Montagerichtung des Antriebsmoduls (58) im Wesentlichen quer, insbesondere im Wesentlichen senkrecht, zur Montagerichtung des Betätigungsmoduls (56) ausgerichtet ist.
